# EUROPEAN PATENT SPECIFICATION

(11) **EP 4 684 227 B1**
(45) Date of publication and mention of the grant of the patent: **14.10.2026**
(21) Application number: 24827245.2
(22) Date of filing: 22.11.2024
(51) Int. Cl.: G01S 5/02, G01S 19/39, G01S 19/45, B60W 60/00

(54) **PROBABILISTIC STATE TRACKING USING UNBALANCED PROBABILISTIC FILTER**
PROBABILISTISCHE ZUSTANDSVERFOLGUNG MIT UNAUSGEGLICHENEM PROBABILISTISCHEM FILTER
SUIVI D'ÉTAT PROBABILISTE À L'AIDE D'UN FILTRE PROBABILISTE DÉSÉQUILIBRÉ

(30) Priority: 16.02.2024 US 202418443448
(43) Date of publication of application: 28.01.2026
(73) Proprietor: MITSUBISHI ELECTRIC CORPORATION, Chiyoda-ku Tokyo 100-8310 (JP)
(72) Inventor: BERNTORP, Karl, Cambridge, Massachusetts 02139-1955 (US); GREIFF, Marcus, Cambridge, Massachusetts 02139-1955 (US)
(74) Representative: Pfenning, Meinig & Partner mbB
(86) International application number: PCT/JP2024/080203
(87) International publication number: WO 2025/173418

(56) References cited:
- US-A1- 2022 373 671
- US-A1- 2023 135 987
- US-A1- 2024 004 085
- LIU ZHENG ET AL: "State of charge estimation for Li-ion batteries based on iterative Kalman filter with adaptive maximum correntropy criterion", JOURNAL OF POWER SOURCES, ELSEVIER, AMSTERDAM, NL, vol. 580, 15 June 2023 (2023-06-15), XP087377561, ISSN: 0378-7753, [retrieved on 20230615], DOI: 10.1016/J.JPOWSOUR.2023.233282
- BETNTORP KARL ET AL: "Bayesian Sensor Fusion for Joint Vehicle Localization and Road Mapping Using Onboard Sensors", 2023 26TH INTERNATIONAL CONFERENCE ON INFORMATION FUSION (FUSION), INTERNATIONAL SOCIETY OF INFORMATION FUSION, 27 June 2023 (2023-06-27), pages 1 - 8, XP034408871, DOI: 10.23919/FUSION52260.2023.10224204

## Description

### [Technical Field]

This present disclosure relates generally to tracking a state of an object or a device such as a vehicle with probabilistic filters, and more particularly to a system and a method for tracking a state of an object with self-adapting probabilistic filter resilient to measurement noise variations.

### [Background Art]

Various control methods use probabilistic filters to estimate a state of a device under control. A probabilistic filter, such as a Kalman filter, uses a series of measurements observed over time, including statistical noise and other inaccuracies, and produces estimates of unknown variables that tend to be more accurate than those based on a single measurement alone.

The probabilistic filters work by a two-phase process that includes a prediction phase and an update phase. For the prediction phase, the probabilistic filter produces estimates of current state variables, along with their uncertainties. To that end, the probabilistic filter employs a prediction model subject to process noise. An example of the prediction model is a motion model of the device under control. Further, an outcome of the next measurement (corrupted with some error, including random noise) is observed and the estimates of current state variables are updated using a weighted average of the measurements, with more weight being given to measurements with greater certainty. To that end, the probabilistic filter employs a measurement model subject to measurement noise. Both the process noise and the measurement noise can be represented by a probability density function (PDF) showing a likelihood of possible variations of the estimated state and/or the measurements.

Usually, the process noise and the measurement noise are predetermined to reflect the understanding of the uncertainty of the motion model and the reliability of the measurements. However, in several applications, it is impractical to predetermine the measurement noise. For example, for vehicle control applications where a vehicle is controlled based on the state of the vehicle tracked using measurements of a Global Navigation Satellite System (GNSS), the GNSS measurements have different reliabilities at different instances of time. For example, at different instances of time, different constellations of satellites can be in the line of sight of the GNSS receiver of the vehicle causing variations in the measurement noises. Additionally or alternatively, satellite signals can be subject to multipath adding significant noise to the GNSS measurements.

To that end, it is desired to adjust the measurement noise based on the state of the vehicle being tracked and the control application. While it is possible to vary the measurement noise in the probabilistic filters, such as the Kalman filter, estimation of the measurement noise in real-time applications is computationally challenging and also can lead to divergence of the probabilistic filter. This challenge is in part due to difficulties in the analysis of statistical properties of the measurements and assumptions underlying the operation of the probabilistic filter.

Further, in some application scenarios of vehicle tracking and control, such as in autonomous driving, a robust and high-accuracy localization technology is required for accurate and reliable navigation. Typically, in any autonomous vehicle, many sensors are installed in the autonomous driving assistance and control functions, and the main purpose of these sensors is object detection. However, these multiple sensors have not been leveraged sufficiently and the problem of data accuracy persists.

Document US 2024/004085 A1 discloses a system and a method for controlling a device using a compound probabilistic filter. The method comprises collecting a sequence of measurements indicative of the state of the device at different control steps. Further, the method comprises executing iteratively a compound probabilistic filter configured to track the state of the device at each of the different control steps using the sequence of measurements to produce a sequence of states of the device corresponding to the sequence of measurements. Furthermore, the method comprises controlling the device using the tracked state of the device.

Document US 2023/135987 A1 discloses a tracking system for tracking an expanded state of an object. The tracking system executes, for a predetermined time period, a probabilistic filter that iteratively tracks a belief on the expanded state of the object, wherein the belief is predicted using a motion model of the object and is further updated using a compound measurement model of the object. After the predetermined time period, the updated beliefs are smoothed to generate a state-decoupled online batch of training data. The compound measurement model includes multiple probabilistic distributions constrained to lie around a contour of the object with a predetermined relative geometrical mapping to the center of the object. The compound measurement model is updated using the online batch of training data. Further, the tracking system tracks the expanded state of the object based on the updated compound measurement model.

Document US 2022/373671 A1 discloses a tracking system for tracking an expanded state of an object. The tracking system comprises at least one processor and a memory having instructions stored thereon that, when executed by the at least one processor, cause the tracking system to execute a probabilistic filter that iteratively tracks a belief on the expanded state of the object, wherein the belief is predicted using a motion model of the object and is further updated using a compound measurement model of the object. The compound measurement model includes multiple probabilistic distributions constrained to lie on a contour of the object with a predetermined relative geometrical mapping to the center of the object. Further, the tracking system tracks the expanded state of the object based on the updated belief on the expanded state.

Accordingly, there is a need for a system and a method for tracking an object suitable for autonomous driving systems, that can accommodate the presence of multiple sensors for vehicle tracking and control-related functions in autonomous driving applications.

### [Summary of Invention]

The invention is defined by the claims, whereby independent claims 1 and 3 pertain to a system and a corresponding method using a probabilistic filter for tracking a state of a device under control.

Some embodiments are based on realizing that the cause of a problem of adjusting the measurement noise used by probabilistic filters to track the state of an object lies at least in part in the coupling of process noise and measurement noise in each execution of the probabilistic filter. Hence, breaking this coupling allows to simplify adjusting of the measurement noise in various tracking and control applications.

Specifically, the probabilistic filter tracks the state of an object iteratively, i.e., over a sequence of control steps, using a prediction model subject to process noise and a measurement model subject to measurement noise. For each control step, a probabilistic filter predicts an estimate of the current state of the object using the prediction model, such as a motion model of the device under control, and, after an outcome of the next measurement is observed, updates the estimates of current state using the measurements in accordance with the measurement model subject to measurement noise.

As such, for each control step, both the process noise and the measurement noise contribute to the uncertainty of the state estimation. The contribution of different types of noises to this uncertainty is unknown, which makes reliable determination of the measurement noise characteristics difficult and sensitive to the impact of the process noise and the realization of the measurement at that time instance.

Some embodiments are based on the understanding that the coupling between the process and measurement noise can be broken, or at least reduced, when, within each control step, a probabilistic filter executes a measurement model more often than a prediction model. For example, during a control step, a probabilistic filter executes a prediction model once and executes a measurement model multiple times. While the first execution of the measurement model merges the process and measurement noise in the estimation of the state of the object, each of the subsequent executions of the measurement model goes further away from the dependency on the process noise.

As such, the extra executions of the measurement model within the control step enable different embodiments to self-adapt the measurement noise iteratively while ignoring the process noise. In addition, while the measurement model typically updates the prediction of the process model, the subsequent execution of the measurement model can update not only the prediction but additionally or alternatively can update the previous estimations of the measurement model to further reduce reliance on the process noise.

Additionally or alternatively, some embodiments adapt the measurement model for each of its subsequent executions. Because the process noise is fixed and considered during the first update by the measurement model, some embodiments update the measurement noise to adapt the measurement model to the quality of the measurement with reduced influence of the process noise.

For example, some embodiments are based on the realization that internal variables and/or calculations of a probabilistic filter, like a Kalman filter, can be used to evaluate the correctness of measurement noise. Specifically, a metric of evaluation of the correctness of the measurement noise can be a likelihood of the measurement noise correlating a current measurement indicative of a state of a device with a state predicted by a prediction model of the probabilistic filter or estimated by the measurement model during its previous iteration.

This correlation can be illustrated by the following example. A current state of the device, e.g., a predicted state of a vehicle updated during the previous iteration of the measurement model, is transformed into a domain of measurements, e.g., in a GNSS measurement space, generating a predicted measurement. For example, such a transformation can be executed using a model of the measurements. Next, the measurement noise is centered on the transformed state to produce a probabilistic distribution of expected measurements. In the case of Gaussian probabilistic distribution used by the probabilistic filter, a mean of the Gaussian probabilistic distribution of the expected measurements is determined by a state predicted by the Kalman filter and a variance is the measurement noise characteristics. The measurements can be mapped on the probabilistic distribution of the expected measurements to estimate the variance. For instance, one embodiment determines the error between the measurement and expected measurement, the estimation error, and jointly determines an interim updated state of the device and an interim updated variance of the measurement. One embodiment determines an interim updated state of the device akin to a Kalman filter update, based on an interim variance from a previous iteration. The interim variance, on the other hand, is determined as a weighted combination of the variance determined during a previous control step and a function of the estimation error.

In such a manner, the measurement noise is evaluated using internal variables and/or calculations of the probabilistic filter without a need for additional statistical analysis of the measurements outside of the performance of the probabilistic filter. It shall be noted that the abovementioned example not only illustrates principles of correlation between state estimation and the measurements, but can also be used to implement the estimation of this correlation. However, different embodiments can use different techniques to evaluate this correlation. For example, one embodiment uses an evaluation of Kalman gains determined by the Kalman filter to update the predicted state and a covariance of the predicted state, which for an unbiased estimator is a mean-square error (MSE). Such calculations are internal to the probabilistic filters, i.e., computed anyway to track the state of the device. Hence, calculations of these variables do not require additional resources.

Accordingly, one embodiment according to the invention, and as defined in independent claim 1, discloses a system using a probabilistic filter for tracking a state of a device under control, including: at least one processor; and at least one memory having instructions stored thereon that, when executed by the at least one processor, causes the system to execute the probabilistic filter over a sequence of control steps to track a change in the state of the device caused by the control steps, wherein for each of the control steps, the probabilistic filter uses a prediction model subject to prediction noise to estimate a current state of the device and uses a measurement model subject to measurement noise to update the estimate of the current state of the device based on measurements of the state of the device, wherein for at least some of the control steps, the probabilistic filter executes measurement model more times than the prediction model; and output data indicative of the tracked state of the device.

During a current control step, the probabilistic filter is configured to execute the prediction model to update a previous state of the device determined during a previous control step to predict the current state of the device; collect a feedback signal including the measurements indicative of the current state of the device; update the predicted current state by executing the measurement model configured to update the predicted current state of the device based on the measurements, to produce the estimate of the current state of the device; and execute the measurement model iteratively until a termination condition is met. For each iteration, the probabilistic filter is configured to update the estimate of the current state of the device with the measurement model subject to the measurement noise updated during a previous iteration; and update the measurement noise based on a correlation of the measurements with the updated estimate of the current state of the device.

To determine the correlation of the measurements, the probabilistic filter is configured to center a mean of a probabilistic distribution representing the measurement noise on predicted measurements generated by transforming one or a combination of the predicted current state of the device and the estimate of the current state of the device to measurement space; and update a variance of the probabilistic distribution to increase likelihood of sampling the measurements on the probabilistic distribution with the updated variance.

Another embodiment according to the invention, and as defined in independent claim 3, discloses a corresponding method.

The presently disclosed embodiments will be further explained with reference to the attached drawings. The drawings shown are not necessarily to scale, with emphasis instead generally being placed upon illustrating the principles of the presently disclosed embodiments.

### [Brief Description of Drawings]

[Fig. 1A]

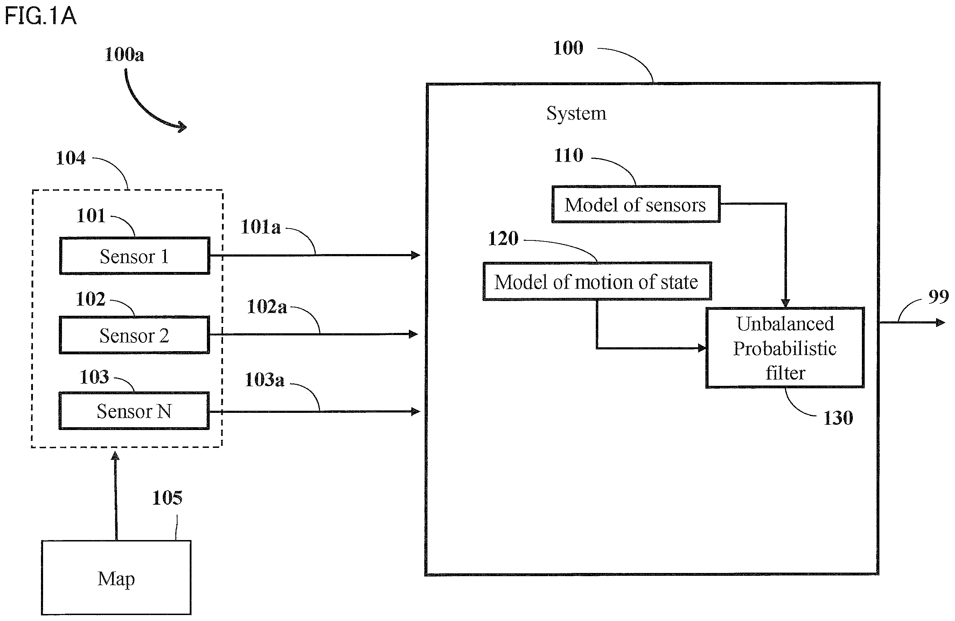

   Figure 1A shows a general schematic of a system using a disbalanced probabilistic filter according to some embodiments.
[Fig. 1B]

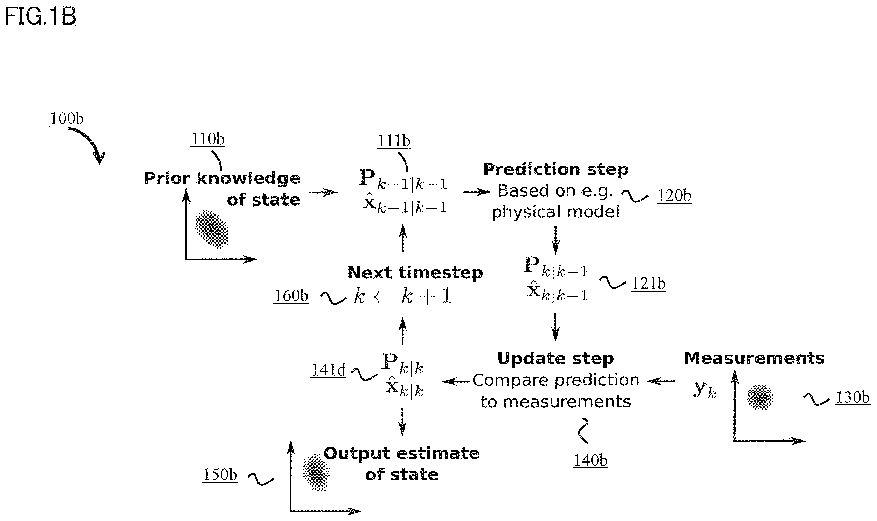

   Figure 1B shows a schematic of the Kalman filter (KF) used by some embodiments for probabilistic state estimation.
[Fig. 2]

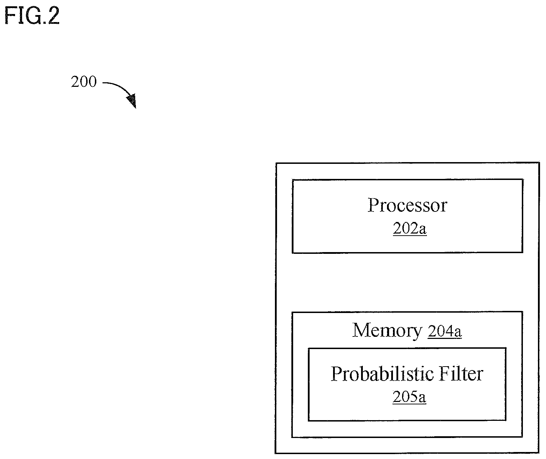

   Figure 2 illustrates a block diagram of a system for tracking a state of a device, according to an embodiment.
[Fig. 3A]

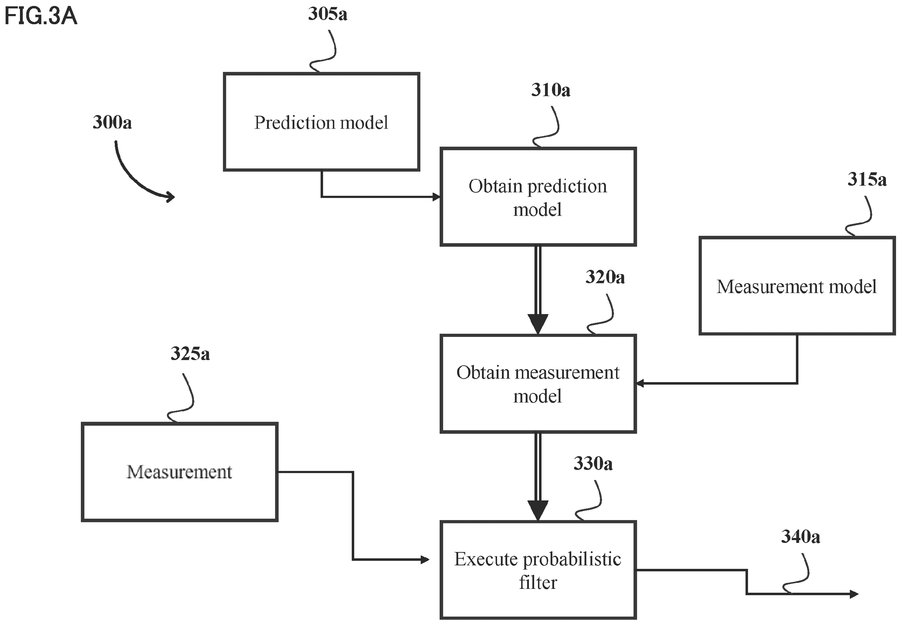

   Figure 3A shows a flowchart of a method for tracking a state of a device according to one embodiment.
[Fig. 3B]

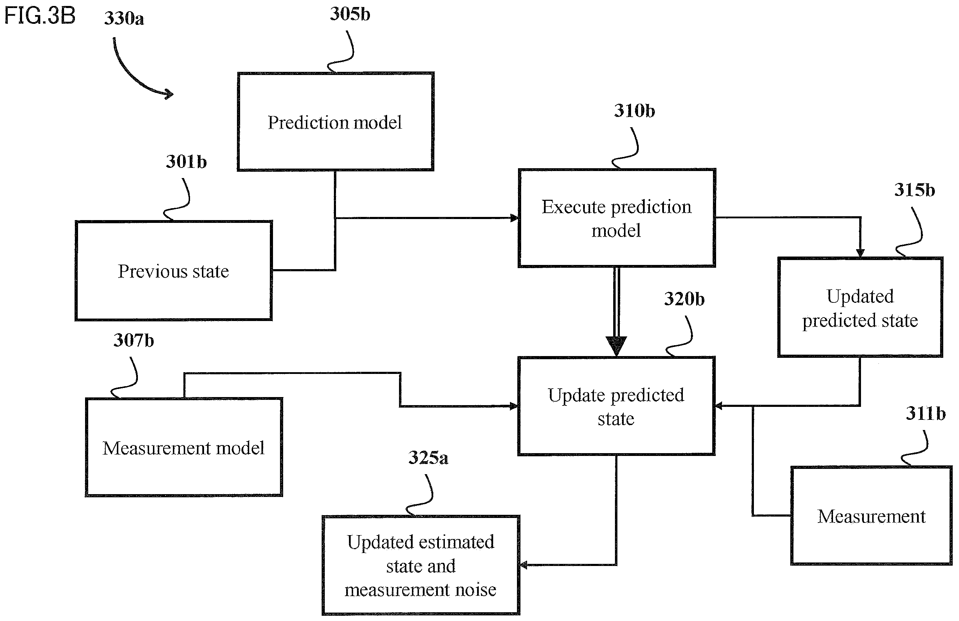

   Figure 3B shows a flowchart of a method for executing a probabilistic filter during a current control step according to some embodiments.
[Fig. 3C]

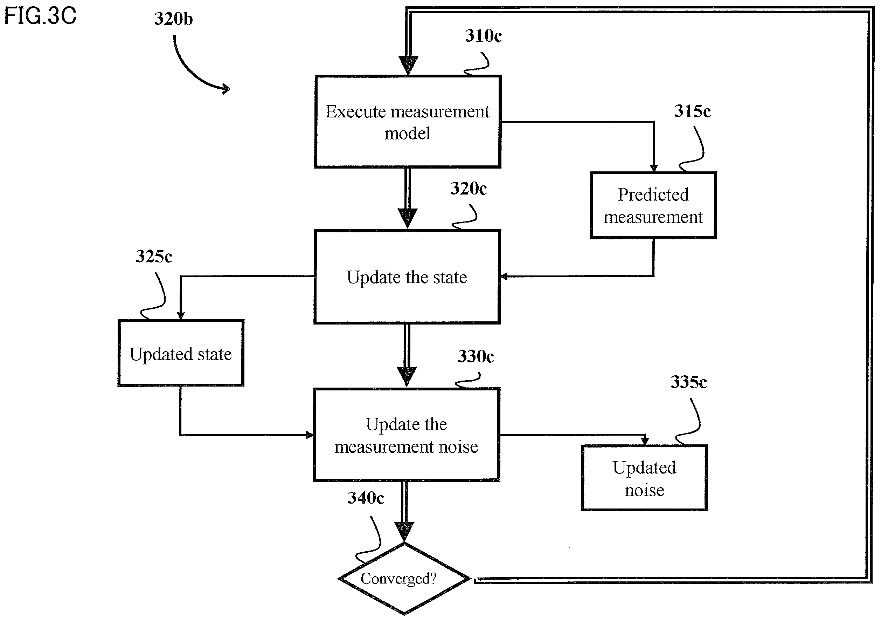

   Figure 3C shows a flowchart of a method for updating the predicted state and measurements noise iteratively according to some embodiments.
[Fig. 4A]

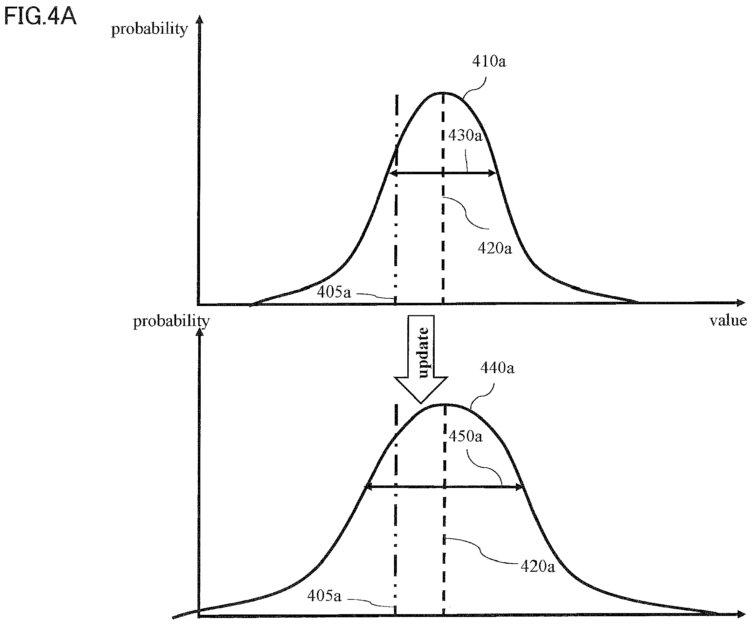

   Figure 4A shows a conceptual illustration of a method for updating the covariance of the measurement noise by the probabilistic filter according to some embodiments.
[Fig. 4B]

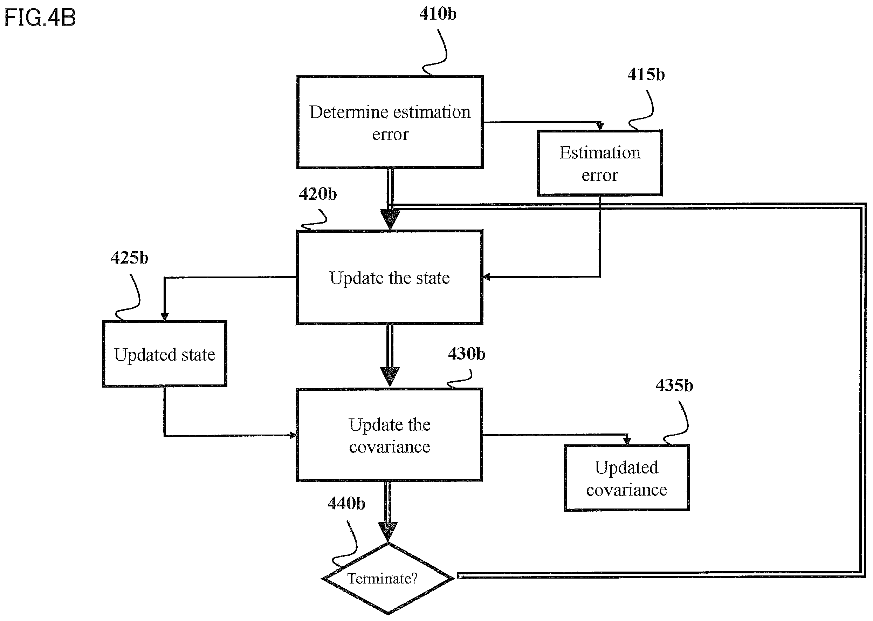

   Figure 4B shows a flowchart of a method for updating the covariance of the probabilistic distribution according to one embodiment.
[Fig. 5A]

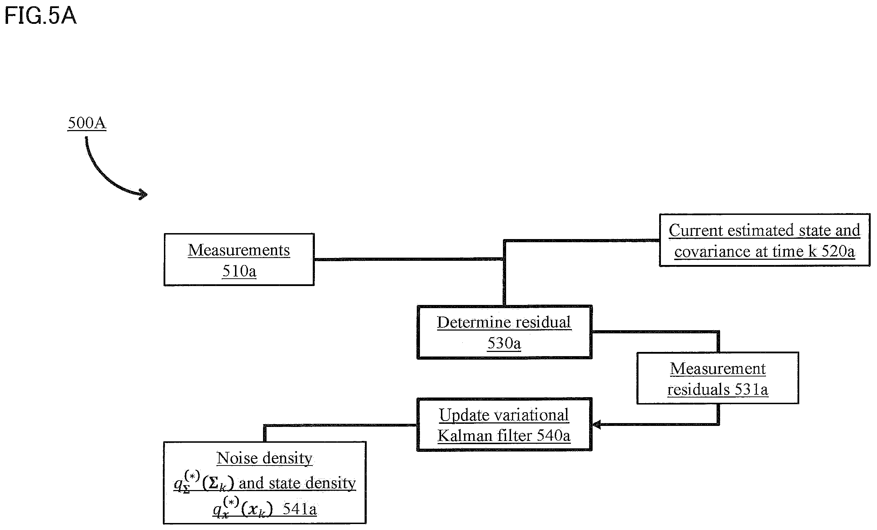

   Figure 5A shows a flowchart of a method for updating the state of the device and the covariance of the measurement using the variational Bayesian methodology employed by some embodiments.
[Fig. 5B]

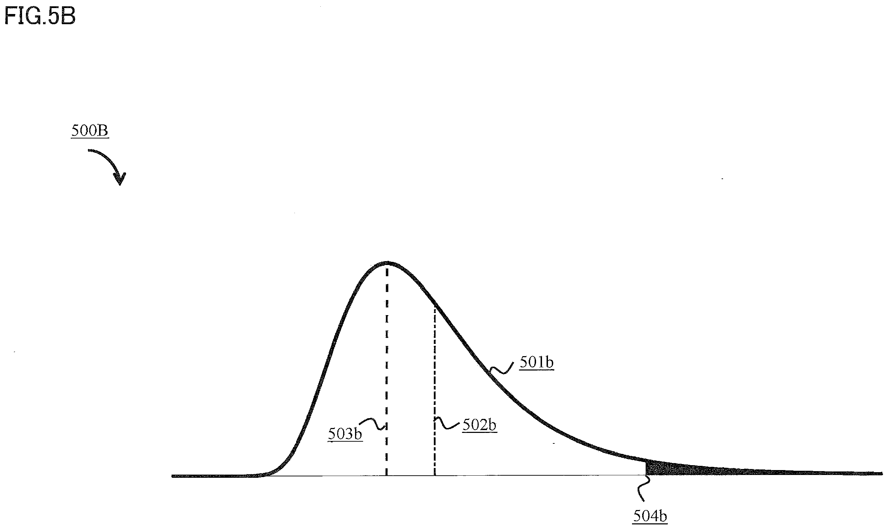

   Figure 5B shows a schematic of the probability density function of an inverse-Wishart distribution in one dimension used by some embodiments.
[Fig. 5C]

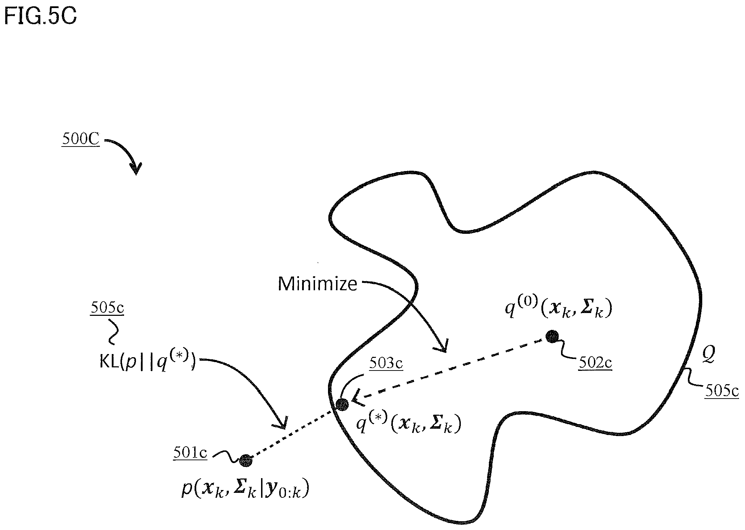

   Figure 5C shows an illustration of the variational inference problem addressed by some embodiments.
[Fig. 5D]

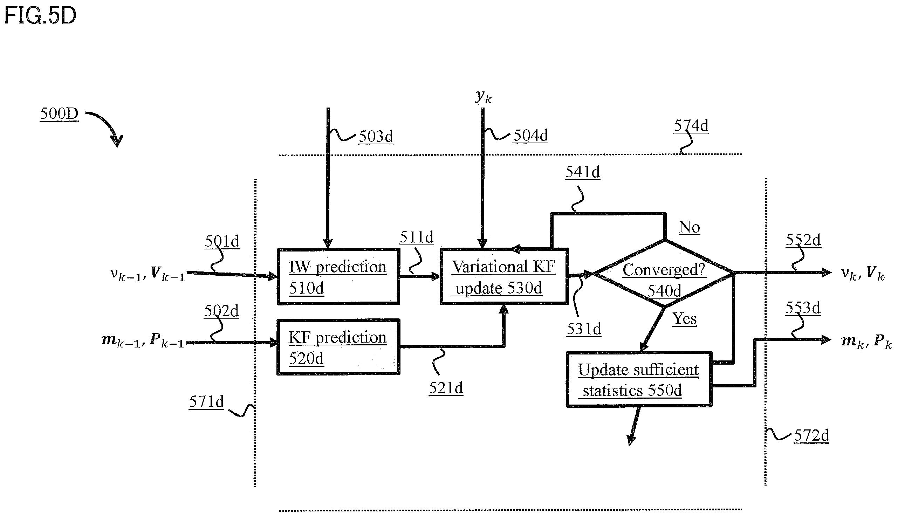

   Figure 5D shows a block diagram of the variational Bayes KF implemented according to one embodiment.
[Fig. 5E]

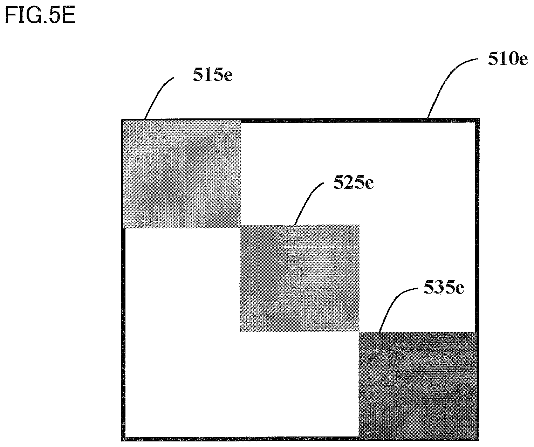

   Figure 5E shows an illustration of the block-diagonal structure of a measurement covariance according to some embodiments.
[Fig. 5F]

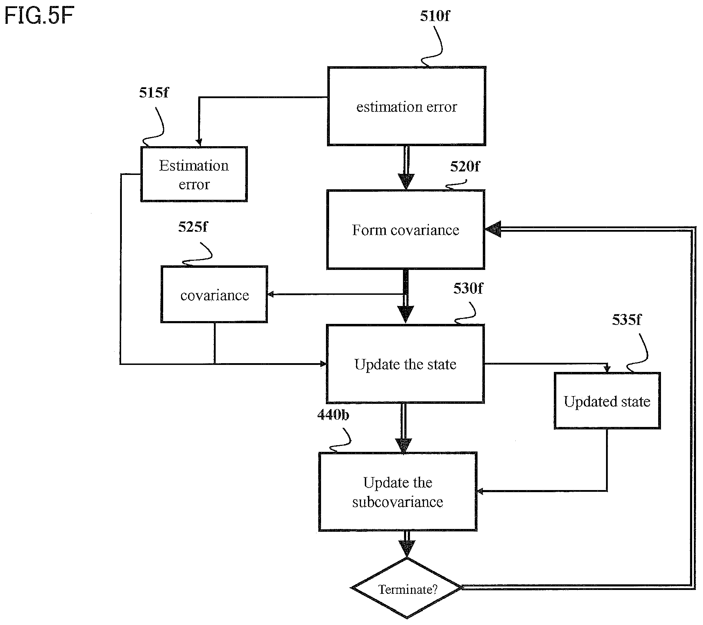

   Figure 5F shows a flowchart of a method for sequentially updating noise covariances of different noise sources wherein the covariance matrix of the set of sensors includes a set of block-diagonal matrices, such as the matrix in Figure 5E.
[Fig. 5G]

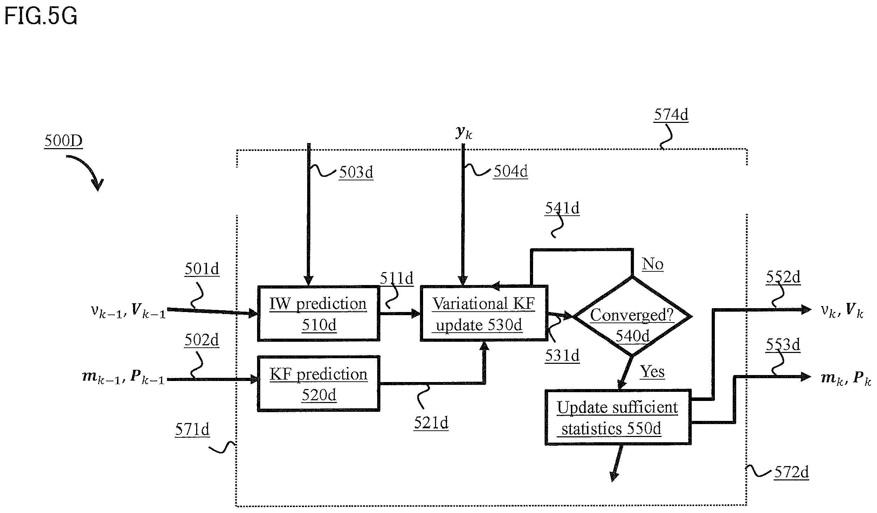

   Figure 5G shows a block diagram of the variational Bayes KF implemented according to one embodiment.
[Fig. 6A]

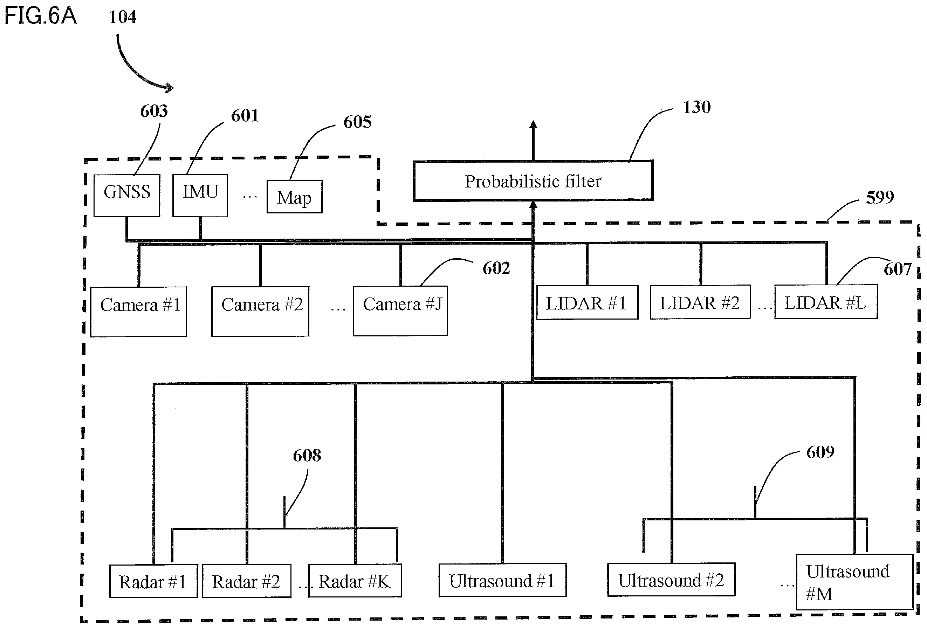

   Figure 6A illustrates an exemplar sensor suite used by the probabilistic filter according to some embodiments.
[Fig. 7A]

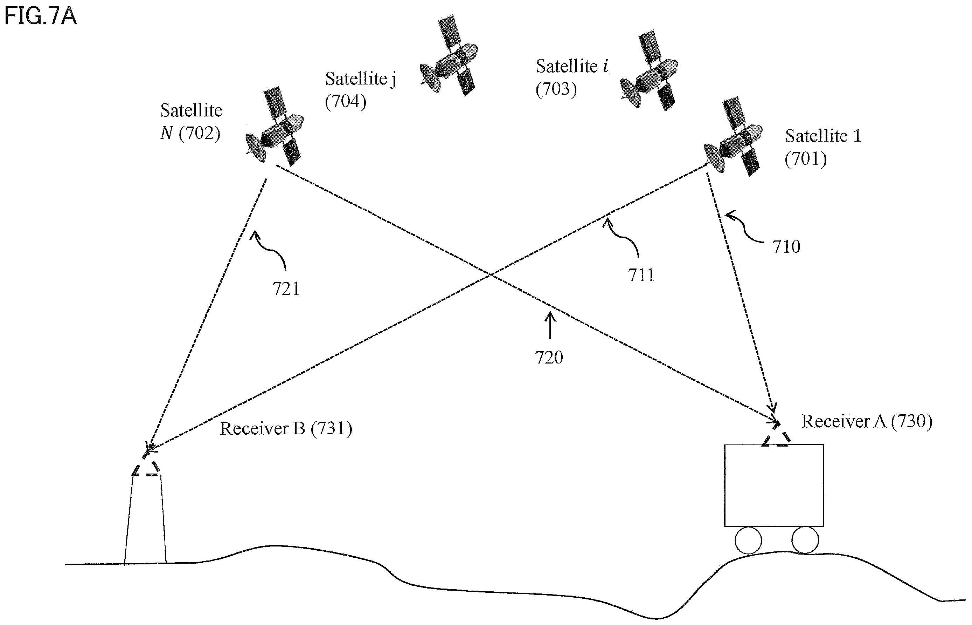

   Figure 7A shows a schematic of the GNSS, according to some embodiments.
[Fig. 7B]

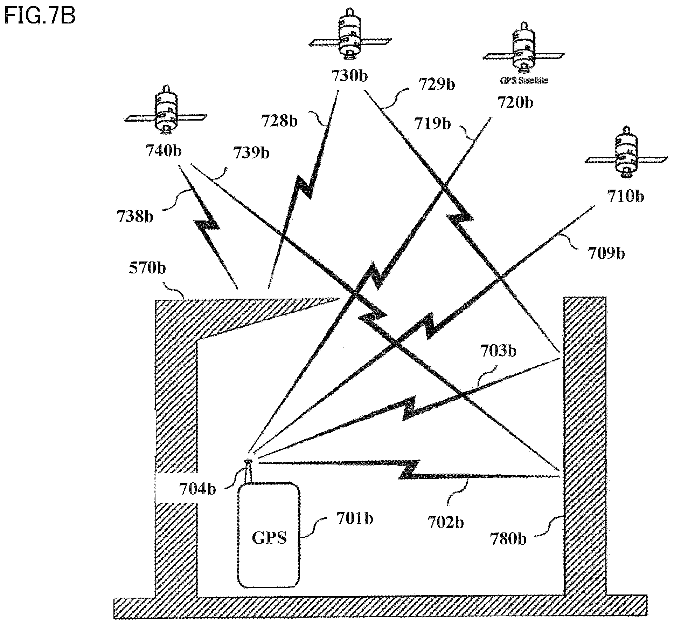

   Figure 7B shows an illustration of a scenario where multipath disturbs the signals for the GNSS receiver addressed by some embodiments.
[Fig. 7C]

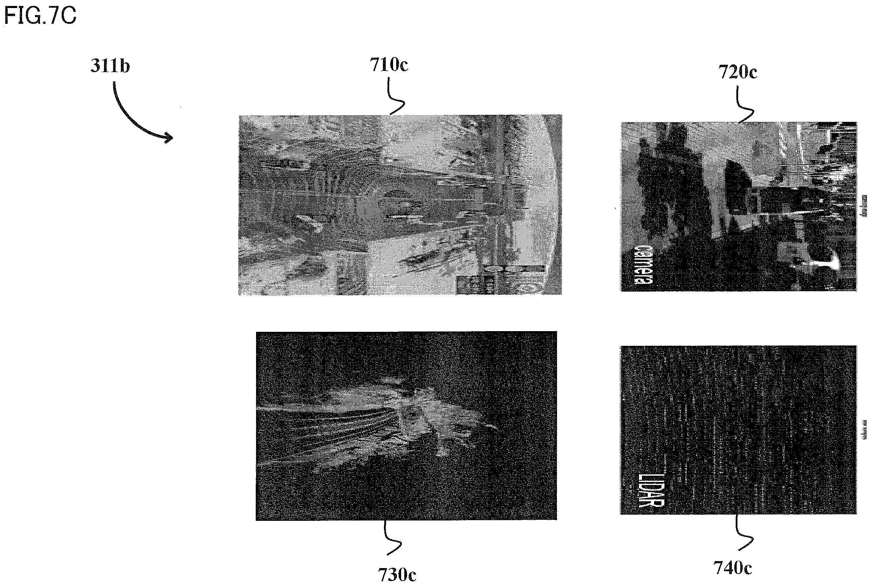

   Figure 7C shows an illustration of different sensor measurements collected according to various embodiments.
[Fig. 7D]

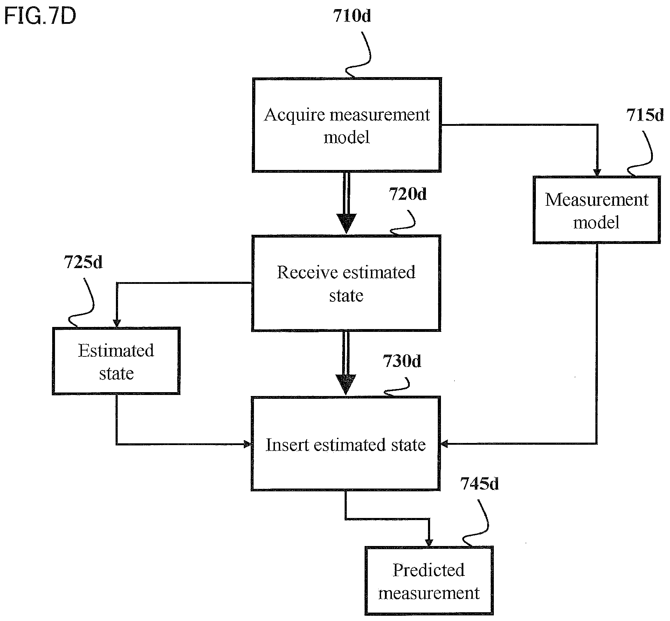

   Figure 7D shows a schematic of a method for determining the predicted measurement from the state of the device.
[Fig. 7E]

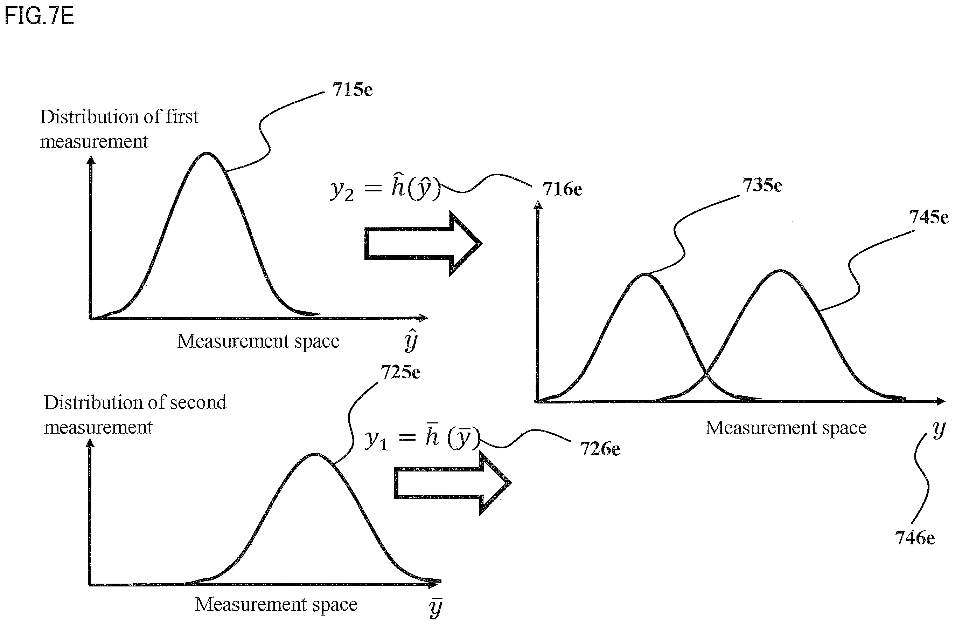

   Figure 7E shows an illustration of how measurements defined on different measurement spaces are transformed into the same measurement space for comparing each other, according to various embodiments.
[Fig. 8]

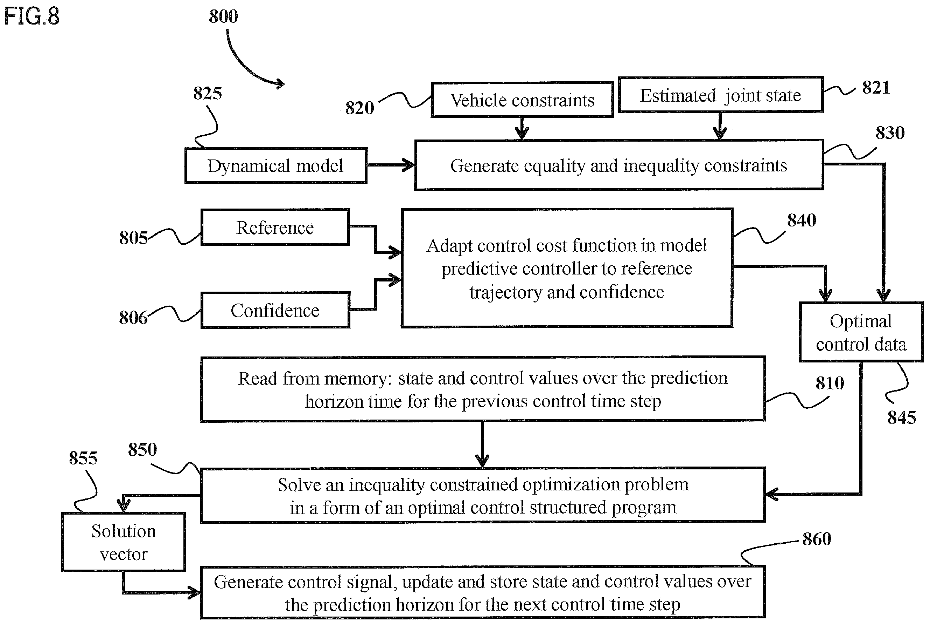

   Figure 8 shows a block diagram of a method for controlling a vehicle based on an estimated joint state, according to some embodiments.
[Fig. 9A]

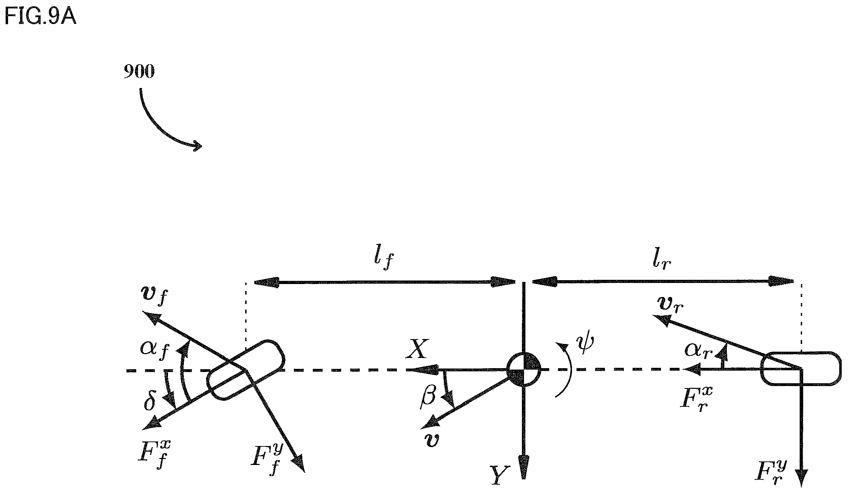

   Figure 9A shows an illustration of a motion model employed in the probabilistic filter according to some embodiments.
[Fig. 9B]

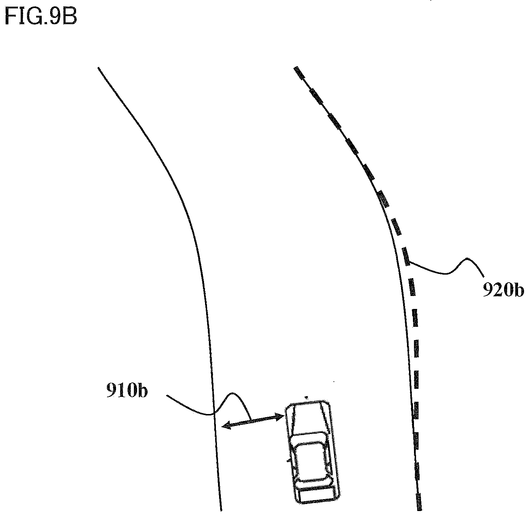

   Figure 9B shows an illustration of a model of the camera measurements employed in the probabilistic filter according to some embodiments.
[Fig. 9C]

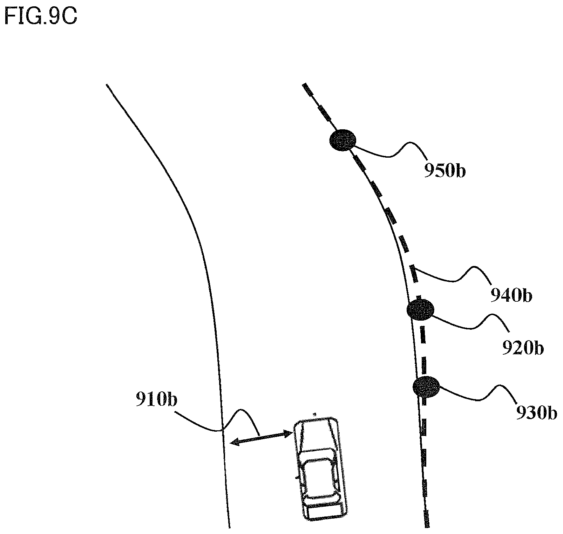

   Figure 9C shows a scenario for sample the polynomial function according to some embodiments.
[Fig. 10A]

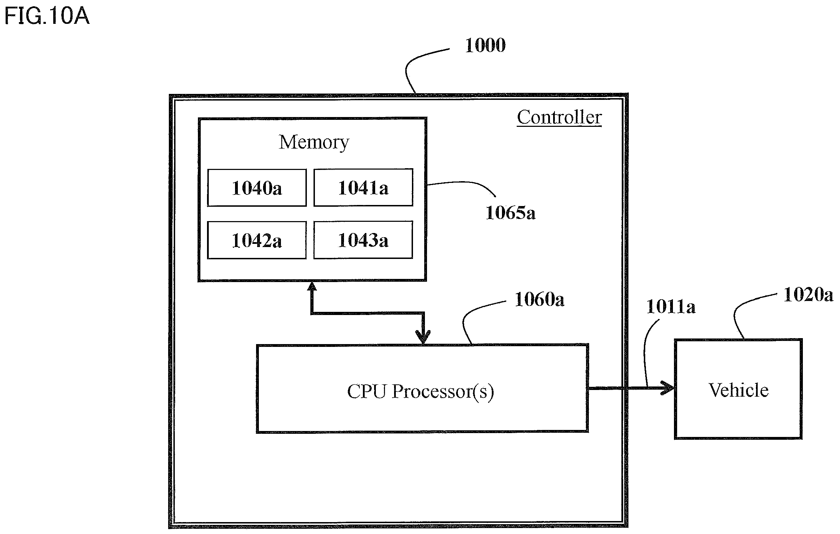

   Figure 10A shows a block diagram of a controller for controlling the movement of a vehicle based on a joint state tracked using the GNSS and camera measurements, according to some embodiments.
[Fig. 10B]

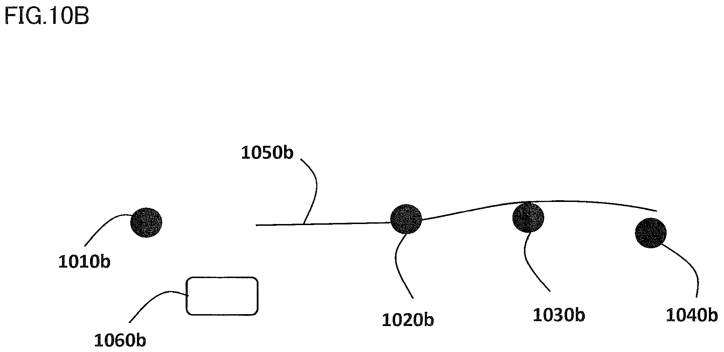

   Figure 10B illustrates a scenario where a vehicle drives close to a lane edge represented by lane markers used by some embodiments.
[Fig. 10C]

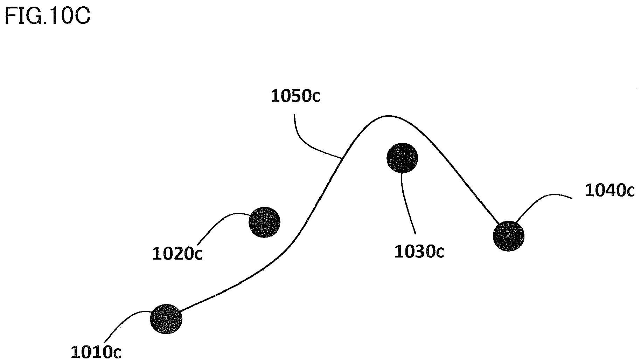

   Figure 10C shows an illustration of how to represent the map according to some embodiments.
[Fig. 10D]

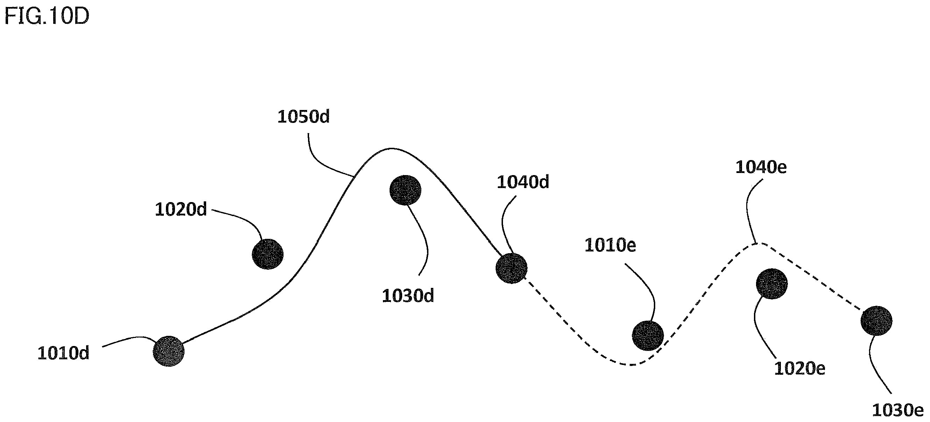

   Figure 10D shows an illustration of a polynomial representation used by some embodiments.
[Fig. 10E]

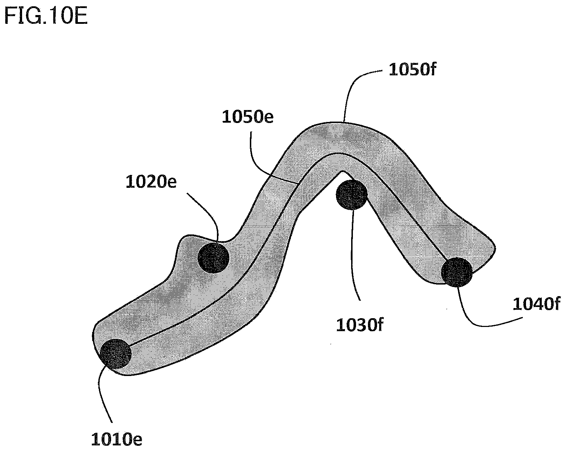

   Figure 10E shows an illustration of a continuous spline representation used by some embodiments.
[Fig. 10F]

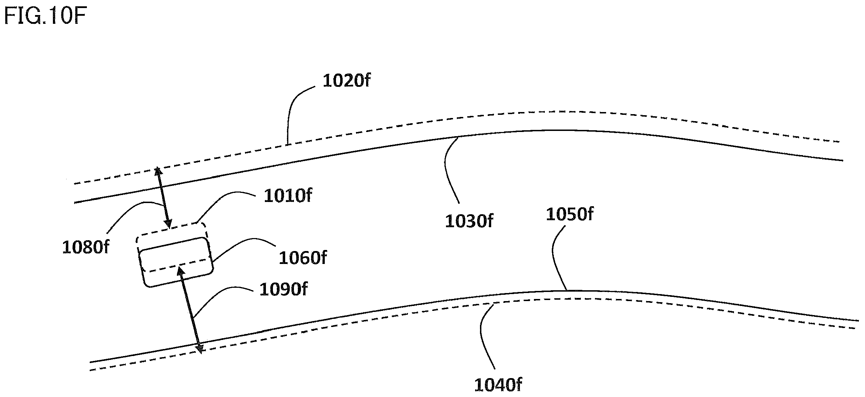

   Figure 10F shows an illustration of a scenario where a vehicle travels on a road with lane markings employed by some embodiments.
[Fig. 10G]

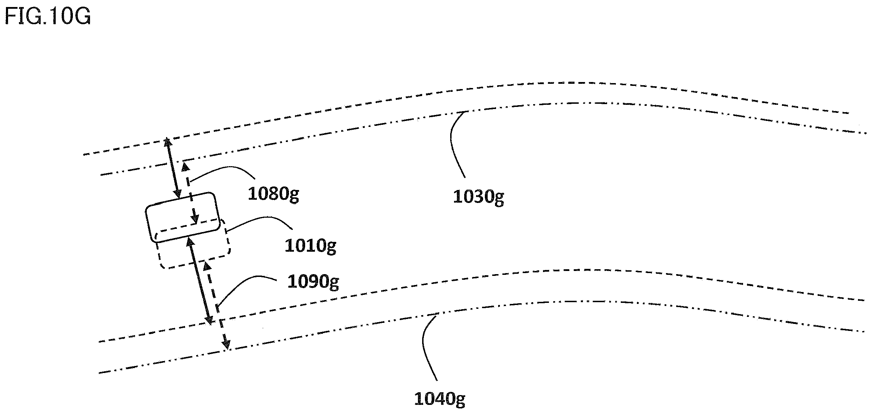

   Figure 10G shows an illustration of a scenario where the same vehicle, in Figure 10F, travels on the same road.
[Fig. 10H]

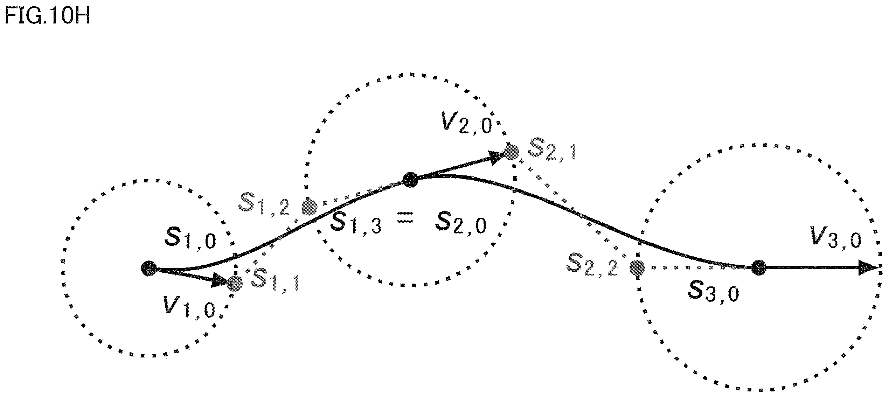

   Figure 10H shows an illustration of a parametrization of a spline enforcing continuity implicitly according to some embodiments.
[Fig. 11A]

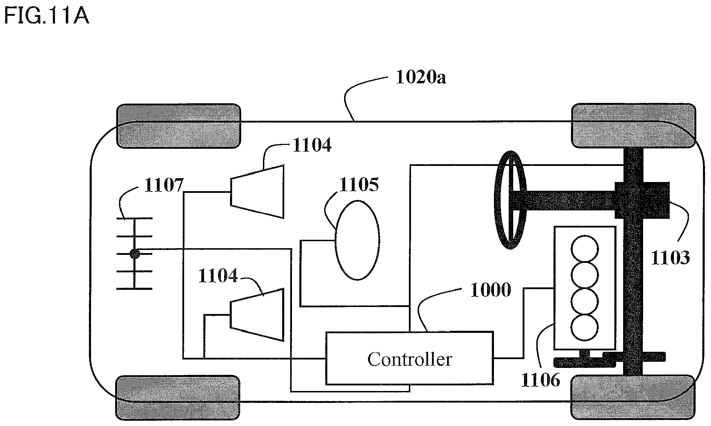

   Figure 11A shows a schematic of the vehicle including the controller 1000, according to some embodiments of the present disclosure.
[Fig. 11B]

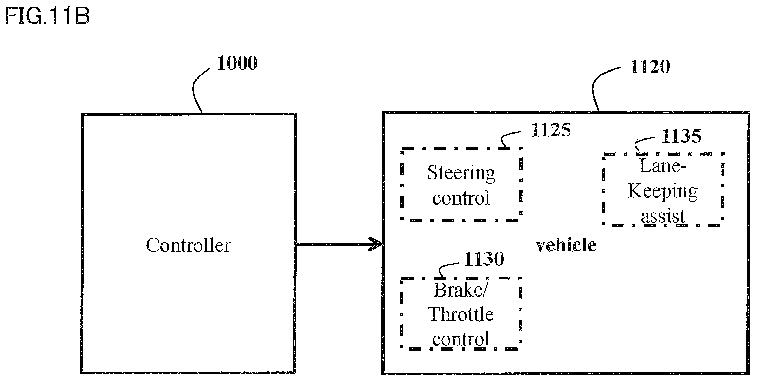

   Figure 11B shows a schematic of the interaction between different actuators of a vehicle according to some embodiments of the present disclosure.
[Fig. 12A]

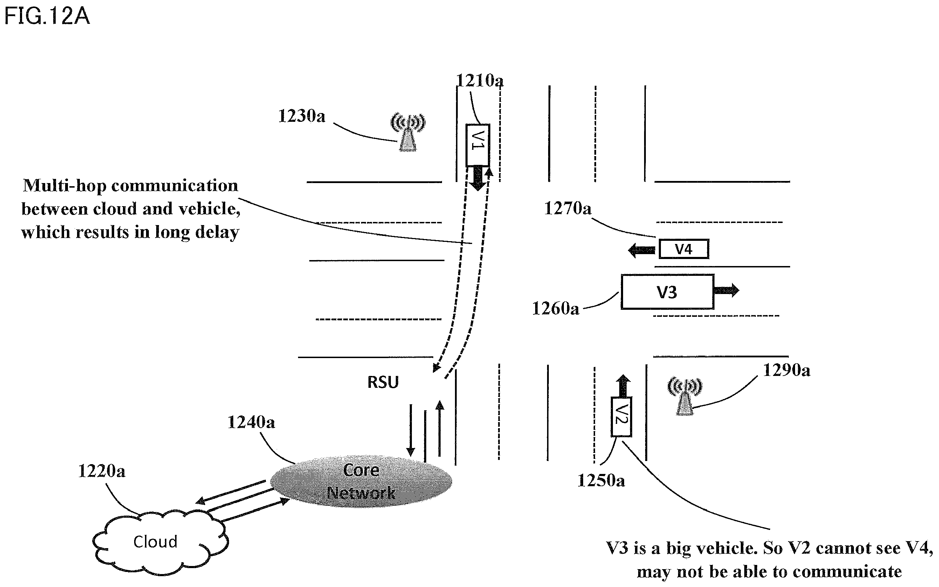

   Figure 12A shows a traffic scenario illustrating the principles employed by some embodiments.
[Fig. 12B]

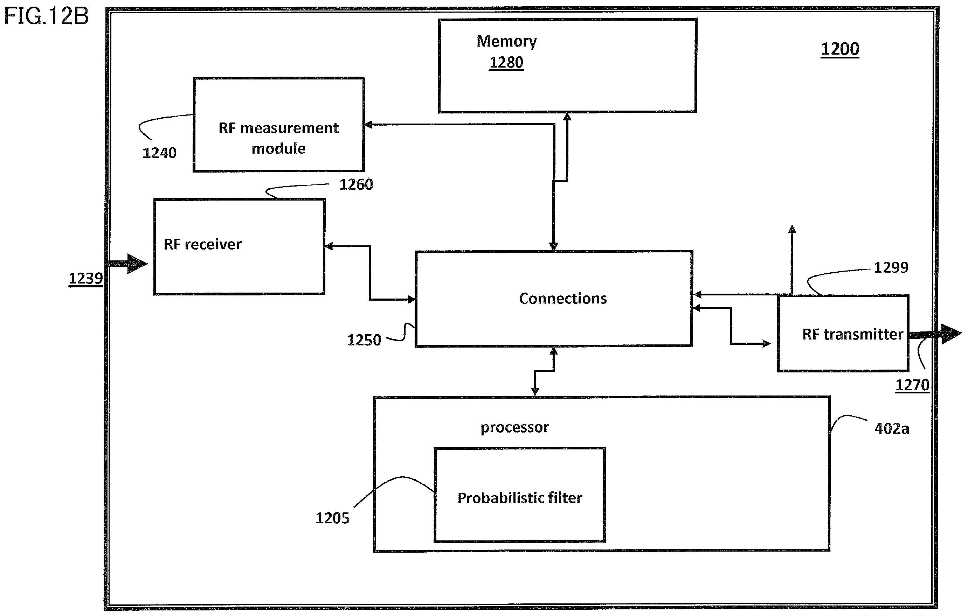

   Figure 12B shows a remote server for tracking a map using unsynchronized cooperation of information received from one or several RSUs transmitted over radio frequency (RF) channel according to some embodiments.
[Fig. 12C]

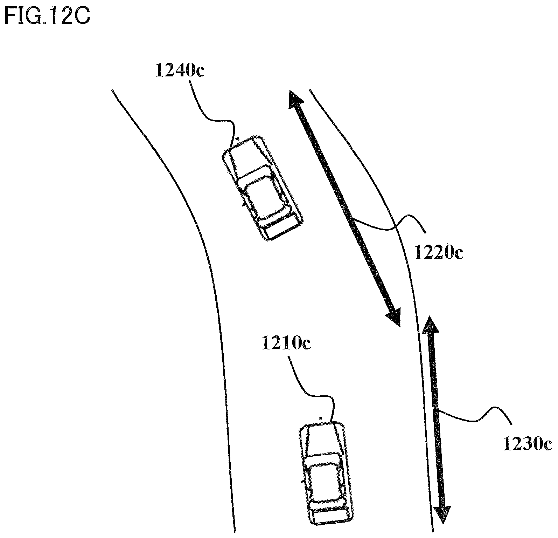

   Figure 12C shows an exemplary illustration of transmitting a mean and a covariance of a map segment to a vehicle according to some embodiments.
[Fig. 12D]

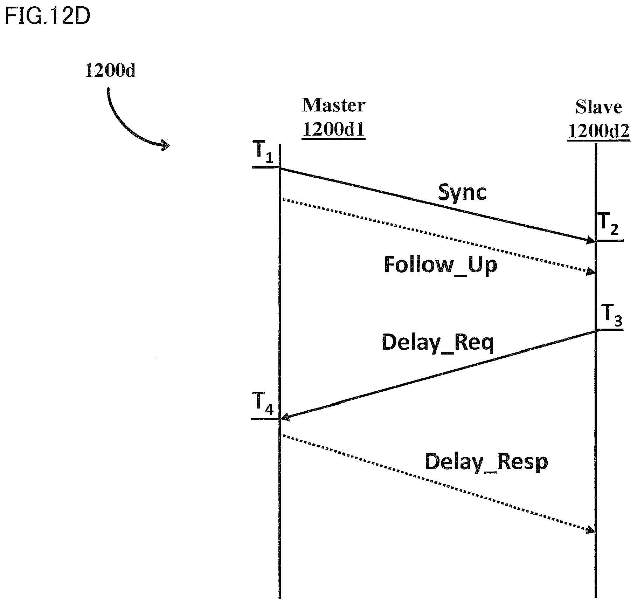

   Figure 12D illustrates a use case related to synchronization message exchange in IEEE Precision Time Protocol (PTP) based synchronization.
[Fig. 13]

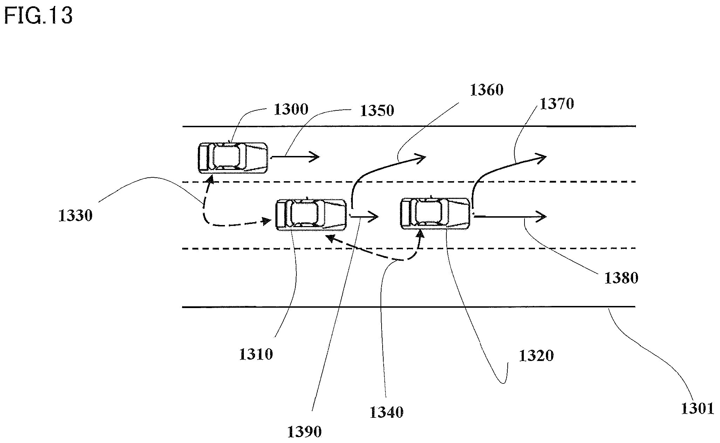

   Figure 13 shows an example of vehicle-to-vehicle (V2V) communication and planning based on state estimation according to one embodiment.
[Fig. 14]

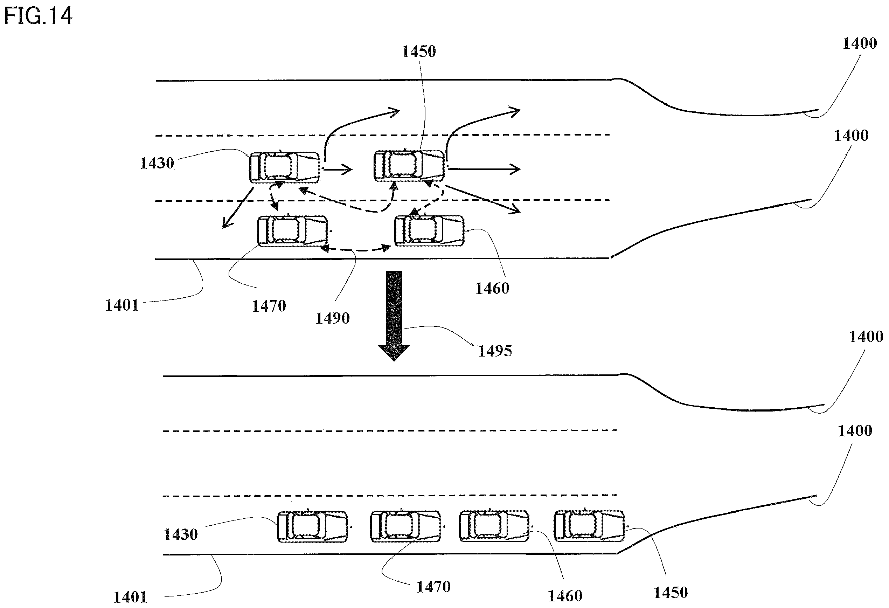

   Figure 14 is a schematic of a multi-vehicle platoon shaping for an accident-avoidance scenario according to one embodiment.
[Fig. 15A]

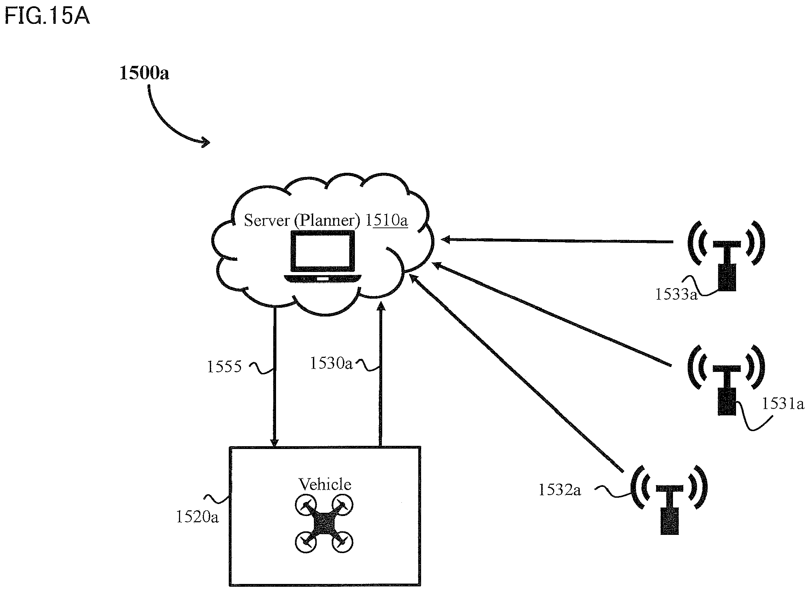

   Figure 15A illustrates an embodiment where an unmanned aerial vehicle (UAV) is controlled using the system implemented on a server, according to some embodiments of the present disclosure.
[Fig. 15B]

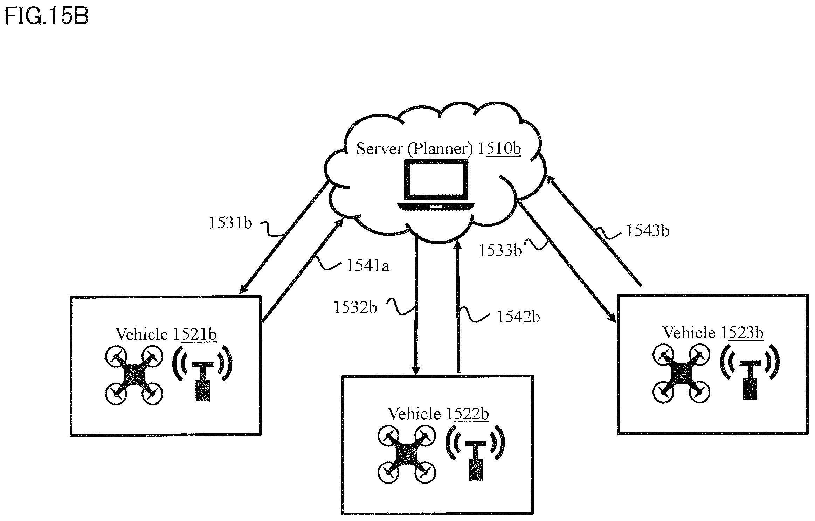

   Figure 15B illustrates a schematic of the implementation of an embodiment of Figure 15A according to some embodiments of the present disclosure.
[Fig. 16]

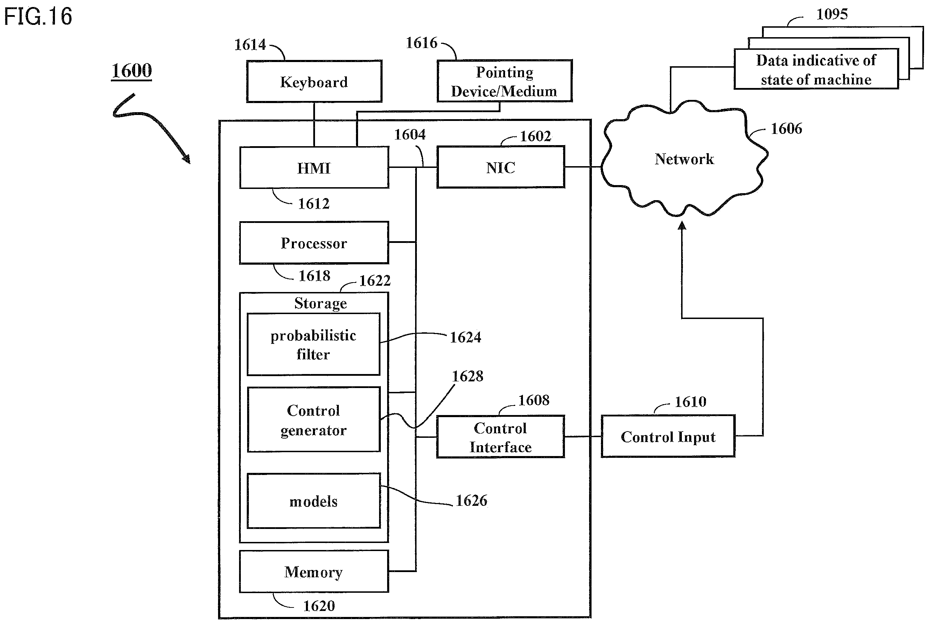

   Figure 16 shows a block diagram of a system for direct and indirect control of mixed-autonomy vehicles in accordance with some embodiments.

### [Description of Embodiments]

In the following description, for purposes of explanation, numerous specific details are set forth in order to provide a thorough understanding of the present disclosure. It will be apparent, however, to one skilled in the art that the present disclosure may be practiced without these specific details. In other instances, apparatuses and methods are shown in block diagram form only in order to avoid obscuring the present disclosure.

As used in this specification and claims, the terms "for example," "for instance," and "such as," and the verbs "comprising," "having," "including," and their other verb forms, when used in conjunction with a listing of one or more components or other items, are each to be construed as open ended, meaning that the listing is not to be considered as excluding other, additional components or items. The term "based on" means at least partially based on. Further, it is to be understood that the phraseology and terminology employed herein are for the purpose of the description and should not be regarded as limiting. Any heading utilized within this description is for convenience only and has no legal or limiting effect.

It is the object of some embodiments to provide a system and method for tracking the state of an object or device under control using a probabilistic filter accounting for uncertainties in a motion model of the state of the device and uncertainties in a measurement model of the measurements sensing the state of the device. It is the object of other embodiments to use such a probabilistic filter when the noise affecting the measurements is time-varying, for example, due to changing external conditions. Other objects perform joint localization of a state moving in an environment and estimation of a map of the environment by fusing measurements of different sensors having measurements indicative of a state of a device and a state of the map of the environment of the device. Herein, a device or an object can refer to a vehicle, wheeled, legged, or aerial, it can refer to a computation module mounted on said vehicle, it can refer to a stand-alone module including capabilities for sensing measurements from a global navigation satellite system (GNSS), and it can refer to a standard computer. The state of a device includes a position. Additionally, a state can include a velocity and a heading rate, and it can include disturbance states that are included in the state vector to estimate external disturbances acting on the device or its measurements. A state of a map of the environment includes parameters parametrizing the map of the environment.

To this end, Figure 1A illustrates a general schematic of a system 100 according to some embodiments. As used herein, the system 100 together with information from one or multiple sensors - a sensor 101, a sensor 102 and a sensor 103 (herein after collectively referred to as sensors 101 - 103) to provide an estimate 99 of a state implicitly or explicitly measured by the sensors 101 - 103. For example, the system 100 receives information, such as information 101a from the sensor 101, information 102a from the sensor 102, and information 103a from the sensor 103. By using a model 110 of the sensors 101 - 103, for example, a probabilistic model or a deterministic model, and potentially additionally a model 120 of the motion of the state measured implicitly or explicitly of the sensors 101 - 103, a probabilistic filter 130 merges the information (herein after collectively referred to as information 101a - 103a) to produce the state estimate 99. The state estimate 99 generated by the probabilistic filter 130 of the system 100 configures the system 100 to track the state of a device 104 under control, associated with the different sensors 101 - 103.

In an example, the device 104 is a vehicle moving in an environment 100a that is represented by a map 105 (hereinafter, the device 104 is referred to as the vehicle for brevity of explanation). The information of 101a - 103a of the different sensors 101 - 103 is represented by measurements, including measurements of a Global Navigation Satellite System (GNSS) indicative of a location of the vehicle 104 with respect to the GNSS. In some embodiments at least one of the sensors 101 - 103 is a camera, and the information 101a - 103a from the sensors includes measurements of the camera indicative of a location of the vehicle 104 with respect to the map 105 of the environment 100a.

The system 100 may be a computing system, a navigation unit, an advanced driver assistance system (ADAS), an autonomous navigation unit, and the like. To that end, the system 100 includes at least one processor and at least one memory having instructions stored thereon that, when executed by the at least one processor, causes the system to perform functions related to tracking the state of the vehicle 104. In other embodiments, the system 100 also updates the map 105. The functions include collecting a sequence of measurements. The sequence of measurements are thus represented as the information 101a - 103a from the sensors and are indicative of locations of the vehicle 104 at different control steps of the system 100.

The system further executes a probabilistic filter 130 to update the estimate of the current state of the device based on measurements of the state of the device, wherein for at least some of the control steps, the probabilistic filter executes the measurement model more times than the prediction model.

Several embodiments of the invention use a probabilistic filter to track the state of the device, using a prediction model subject to prediction noise to estimate a current state of the device and using a measurement model subject to measurement noise to update the estimate of the current state of the device based on measurements of the state of the device. The probabilistic filter 130 is unbalanced according to the principle of some embodiments, such that for at least some of the control steps, the probabilistic filter executes the measurement model more times than the prediction model. Doing this in such a manner allows to reduce the coupling between the process and the measurement noise to increase the accuracy of the tracking.

Figure 1B shows a schematic of the Kalman filter (KF) used by some embodiments for probabilistic state estimation. The KF is a tool for state estimation in linear state-space models, ${x}_{k + 1} = {A}_{k} {x}_{k} + {q}_{k}$ ${y}_{k} = {C}_{k} {x}_{k} + {r}_{k}$ where ${q}_{k} ∼ N \left(0, {Q}_{k}\right)$ ${r}_{k} ∼ N \left(0, {R}_{k}\right)$ and it is the optimal estimator when the noise sources are known and Gaussian, in which case also the state estimate is Gaussian distributed. The KF estimates the mean and variance of the Gaussian distribution because these are the two required quantities, sufficient statistics, to describe the Gaussian distribution.

The KF starts with an initial knowledge 110b, of the state, to determine a mean of the state and its variance 111b. The KF then predicts 120b the state and the variance to the next time step, using a model of the system, to obtain an updated mean and variance 121b of the state. The KF then uses a measurement 130b in an update step 140b using the measurement model of the system, to determine an updated mean and variance 141b of the state. An output 150b is then obtained, and the procedure is repeated for the next time step 160b. The update equations of the linear KF given the above estimation model is ${m}_{\left.k\right| k - 1} = {A}_{k - 1} {m}_{k - 1}$ $\begin{matrix}{P}_{\left.k\right| k - 1} = {A}_{k - 1} {P}_{k - 1} {\left({A}_{k - 1}\right)}^{T} + {Q}_{k} \\ {K}_{k} = {P}_{\left.k\right| k - 1} {\left({C}_{k}\right)}^{T} {\left({C}_{k}{P}_{\left.k\right| k - 1}{\left({C}_{k}\right)}^{T}+{R}_{k}\right)}^{- 1}\end{matrix}$ ${m}_{k} = {m}_{\left.k\right| k - 1} + {K}_{k} \left({y}_{k}-{C}_{k}{m}_{\left.k\right| k - 1}\right)$ ${P}_{k} = \left(I-{K}_{k}{C}_{k}\right) {P}_{\left.k\right| k - 1}$ where the filter posterior at a time *k* is $p \left(\left.{x}_{k}\right|{y}_{0 : k}\right) = N \left({x}_{k}; {m}_{k}; {P}_{k}\right) .$

Figure 2 illustrates a block diagram of a system 200 for tracking a state of a device, according to an embodiment of the present disclosure. The system 200 is equivalent to the system 100, the device is the device 104, as shown in Figure 1A.

The localization system 200 includes a processor 202a and a memory 204a. The processor 202a may be a single core processor, a multi-core processor, a computing cluster, or any number of other configurations. The memory 204a may include random access memory (RAM), read only memory (ROM), flash memory, or any other suitable memory systems. Additionally, in some embodiments, the memory 204a may be implemented using a hard drive, an optical drive, a thumb drive, an array of drives, or any combinations thereof. In an embodiment, the memory 204a stores a probabilistic filter 205a and its associated prediction model and measurement model. The probabilistic filter 205a is explained in detail in other embodiments of this invention. In one embodiment, the system 200 may be communicatively coupled to the device 104.

The probabilistic filters work by a two-phase process that includes a prediction phase and an update phase. For the prediction phase, the probabilistic filter produces estimates of current state variables, along with their uncertainties. To that end, the probabilistic filter employs a prediction model subject to process noise. An example of the prediction model is a motion model of the device under control. Further, an outcome of the next measurement (corrupted with some error, including random noise) is observed and the estimates of current state variables are updated using a weighted average of the measurements, with more weight being given to measurements with greater certainty. To that end, the probabilistic filter employs a measurement model subject to measurement noise. Both the process noise and the measurement noise can be represented by a probability density function (PDF) showing a likelihood of possible variations of the estimated state and/or the measurements.

Figure 3A shows a flowchart of a method 300a for tracking a state of a device according to one embodiment, wherein the method is executed by the at least one processor of the system. First, the method retrieves 310a from memory a prediction model 305a of the device subject to prediction noise, and it retrieves 320a from memory a measurement model 315a subject to measurement noise. Next, using the prediction model 305a and the measurement model 315a and the at least one measurement 325a of the device corresponding to the measurement model 315a, the method executes 330a the probabilistic filter over a sequence of control steps to obtain an updated estimate 340a of the current state of the device.

Probabilistic filters typically assume a fixed measurement noise model that is set a priori, e.g., as a Gaussian distribution having a predetermined covariance. Some embodiments are based on the realization that sensors often have changing characteristics, such that the covariance reflecting the magnitude of the noise of the measurement is itself changing with time. For instance, a camera and associated computer vision method used to measure the distance to another object, a relative position measurement, will have a quality of measurements that vary with a number of conditions, e.g., illumination, precipitation, and the angle of the sun with respect to the camera. For instance, a GNSS receiver measuring the position of a device will have varying quality dependent on whether the receiver is located indoors or outdoors, in a rural or urban setting.

To this end, some embodiments configure the probabilistic filter to update the measurement noise concurrently with updating the state of the device.

Some embodiments are based on realizing that the cause of a problem of adjusting the measurement noise used by probabilistic filters to track the state of an object lies at least in part in the coupling of process noise and measurement noise in each execution of the probabilistic filter. Hence, breaking this coupling allows to simplify adjusting of the measurement noise in various tracking and control applications.

Specifically, the probabilistic filter tracks the state of an object iteratively, i.e., over a sequence of control steps, using a prediction model subject to process noise and a measurement model subject to measurement noise. For each control step, a probabilistic filter predicts an estimate of the current state of the object using the prediction model, such as a motion model of the device under control, and, after an outcome of the next measurement is observed, updates the estimates of current state using the measurements in accordance with the measurement model subject to measurement noise.

As such, for each control step, both the process noise and the measurement noise contribute to the uncertainty of the state estimation. The contribution of different types of noises to this uncertainty is unknown, which makes reliable determination of the measurement noise characteristics difficult and sensitive to the impact of the process noise and the realization of the measurement at that time instance.

Some embodiments are based on the understanding that the coupling between the process and measurement noise can be broken, or at least reduced when, within each control step, a probabilistic filter executes a measurement model more often than a prediction model. For example, during a control step, a probabilistic filter executes a prediction model once and executes a measurement model multiple times. While the first execution of the measurement model merges the process and measurement noise in the estimation of the state of the object, each of the subsequent executions of the measurement model goes further away from the dependency on the process noise.

Hence, the extra executions of the measurement model within the control step enable different embodiments to self-adapt the measurement noise iteratively while ignoring the process noise. In addition, while the measurement model typically updates the prediction of the process model, the subsequent execution of the measurement model can update not only the prediction but additionally or alternatively can update the previous estimations of the measurement model to further reduce reliance on the process noise.

Additionally or alternatively, some embodiments adapt the measurement model for each of its subsequent executions. Because the process noise is fixed and considered during the first update by the measurement model, some embodiments update the measurement noise to adapt the measurement model to the quality of the measurement with reduced influence of the process noise.

For example, some embodiments are based on the realization that internal variables and/or calculations of a probabilistic filter, like a KF, can be used to evaluate the correctness of measurement noise. Specifically, a metric of evaluation of the correctness of the measurement noise can be a likelihood of the measurement noise correlating a current measurement indicative of a state of a device with a state predicted by a prediction model of the probabilistic filter or estimated by the measurement model during its previous iteration.

Figure 3B shows a flowchart of a method for executing a probabilistic filter 330a during a current control step according to some embodiments. First, the method executes 310b a prediction model 305b to update a previous state 301b of the device determined during a previous control step to predict the current state of the device. Next, using the updated predicted state 315b, the method updates 320b the predicted state 315b and the measurement noise using the measurement model 307b in response to the measurement 311b, to produce an updates 325a estimated state and measurement noise characteristics.

Producing the estimated state and measurement noise characteristics can be done in numerous ways. Figure 3C shows a flowchart of a method for updating 320b the predicted state and measurements noise iteratively according to some embodiments. First, the method executes 310c the measurement model to produce a predicted measurement. Next, the method updates the estimate of the current state of the device with the measurement model and the predicted measurement 315c subject to the updated noise 335c during a previous iteration. Finally, using the updated state 325c, the method updates 330c the measurement noise 335c based on the correlation of the measurements with the estimate of the current state of the device. If a termination condition 340c is met the method terminates, otherwise the method is iterated once more from 310c.

In such a manner, the probabilistic filter executes the measurement model more times than the prediction model thereby reducing the coupling between the prediction and measurement noise. Moreover, in some embodiments, the subsequent execution of the measurement model can be based on the prediction of the prediction model and/or based on the previous update of the prediction by the execution of the measurement model. In the latter, the coupling is further reduced. In addition, in some implementations, the measurement noise is updated between the subsequent executions of the measurement model. Due to the decoupling of process and measurement noise, such an update becomes more reliable and computationally efficient than in situations without the decoupling. For example, in some implementations, the measurement model is executed iteratively until a termination condition is met, where for each iteration, the probabilistic filter updates the estimate of the current state of the device with the measurement model subject to the measurement noise updated during a previous iteration and updates the measurement noise based on the correlation of the measurements with the updated estimate of the current state of the device. Examples of termination conditions are the number of iterations and the extent of a change of correlations and/or other parameters since the previous iteration.

Determining the correlation of the measurements and updating the covariance of the measurement noise with the estimate of the current state of the device can be done in multiple ways. Some embodiments update the covariance by assuming Gaussian zero-mean noise centered on the predicted measurement using the current state of the device.

Figure 4A shows a conceptual illustration of a method for updating the covariance of the measurement noise by the probabilistic filter according to some embodiments. First, the method determines a mean 420a of a predicted measurement using the measurement model having the current state of the device inserted into the measurement model. Next, the method centers the probabilistic distribution 410a on the mean 420a. Next, the method updates the covariance 430a, to result in a new covariance 450a. The updated covariance 450a is updated to increase the likelihood of the measurement 405a originating from the updated distribution 440a. In other words, the method compares the measurement 405a with the mean 420a and updates the covariance for the probabilistic distribution 440a to better reflect the measurement.

Some embodiments update the covariance iteratively until a termination condition is met, jointly with the updating of the state. In other words, iteratively the method updates the state of the device in response to the covariance and then updates the covariance in response to the updated state.

Figure 4B shows a flowchart of a method for updating the covariance of the probabilistic distribution according to one embodiment. First, the method determines 410b an estimation error 415b between a current measurement and an expected measurement. Using the estimation error 415b and an updated covariance 435b from a previous iteration, the method updates 420b the state. Next, using the updated state 425b, the method updates 430b the covariance 435b. If a termination condition is met 440b, the method is concluded. Otherwise, it repeats from 420b.

In some mebodimetns, the predicted measurement is determined by transforming the estimate of the state of the device into a measurement space using the measurement model. In other words, the state of the device is transformed in such a way that it can be compared with the measurement obtained from a sensor, to update a state of the device and a variance reflecting the uncertainty of the sensor measurement.

Figure 5A shows a flowchart of a method 500A for updating the state 420b of the device and the covariance 430b of the measurement using the variational Bayesian methodology employed by some embodiments. First, the measurement is obtained at a current control step 510a. Next, the method determines the residual between the measurement and the predicted measurement obtained by inserting the current estimated state into the measurement equation. After determining 530a the estimation residuals 531a, they are used in a variational Bayes Kalman filter 540a to recursively estimate the state of the device and the measurement noise covariance. One output of this filter is a probability density function ${q}_{Σ}^{\left(∗\right)} \left({Σ}_{k}\right)$ 541a over the noise parameters parametrizing the measurement noise characteristics and the estimate of the current state ${q}_{x}^{\left(∗\right)} \left({x}_{k}\right)$. In this section ***Σ**ₖ* denotes the noise covariance of the noise ***e**ₖ* in the measurement model.

Various forms of *q**_{∑}***(***∑**ₖ*) can be considered in the context of the disclosure and various statistics of this distribution can be used to express the measurement noise. One such example of a noise density in relation to Figure 5B, and the variational method is described in Figures 5C and 5D.

Figure 5B shows the probability density function of an inverse-Wishart distribution in one dimension, also known as an inverse-Gamma distribution 501b. In the multivariate setting, a positive number of degrees of freedom, *v*, and a shape matrix, ***V***, dictate the statistical properties of the distribution, defined as $IW \left(Σ; ν; V\right) ∝ {\left|Σ\right|}^{- \frac{ν + n + 1}{2}} exp \left(-\frac{1}{2}trace\left({VΣ}^{- 1}\right)\right) .$

The mean of the inverse-Wishart distribution 502b can be computed as ${E}_{IW \left(Σ; ν; V\right)} \left[Σ\right] = {\left(ν-n-1\right)}^{- 1} V .$

The mode of the inverse-Wishart distribution 503b can be computed similarly as (*v* - *n* + 1)⁻¹***V***. Furthermore, specific quantiles 504b can be evaluated using expressions involving the incomplete gamma function.

This allows for efficient checking of individual dimensions of the noise covariance in the case of multiple measurements (e.g., stemming from multiple sensors), as any of these statistical properties of the inverse-Wishart distribution can be used, e.g., as an outlier indicator. For example, in one embodiment a measurement from a particular sensor can be labeled as an outlier if the associated diagonal element of the noise covariance estimate following *IW*(***Σ**ₖ; νₖ, **V**ₖ*) at a time *k* exceeds a threshold *ε* > 0. That is, if [*E*_{*IW*(***∑***ₖ*;ν*ₖ*,**V***ₖ)}[***∑**ₖ*]]*ᵢᵢ* > *ε*, the measurements associated with said sensor are deemed to be corrupted by modeling errors, and can therefore be removed from the probabilistic filter at the current control step.

Figure 5C illustrates the general idea of the variational inference problem. In one embodiment, the measurement noise covariance of the measurement model follows the inverse-Wishart distribution in Figure 5B, that is, *q**_{∑}***(***∑**ₖ*) *= IW* (***Σ**ₖ; νₖ, **V**ₖ*) and the state estimate follows a Gaussian distribution *q**ₓ***(***x**ₖ*) *= N*(***x**ₖ*; ***m**ₖ, **P**ₖ*). Some embodiments model these as independent and formulate the joint density *q*(***x**ₖ, **∑**ₖ*) *= qₓ*(***x**ₖ*)*q**_{∑}***(***Σ**ₖ*) ∈ 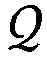 and then update the parameters of the two distributions 502c to find the distribution that best approximates the true posterior 501c.

Choosing the objective function of the optimization problem as the Kullback-Leibler divergence 505c facilitates an update of the parameters associated with 501c that steers it toward the optimal solution 503c. Minimizing ${min}_{q} \left[KL\left(p\left({x}_{k},{Σ}_{k}\left|{y}_{0 : k}\right.\right)\left‖q\left({x}_{k}, {Σ}_{k}\right)\right.\right)\right] .$

With *q*(***x**ₖ, **Σ**ₖ*) factored as an inverse-Wishart and Gaussian distribution becomes a fixed-point iteration that, in one embodiment, is implemented approximately using first-order approximations of the nonlinearities of the measurement model. If using first-order approximations of the nonlinearities of the estimation model, if the solution at the ith iterate at a control step *k* is denoted by ${q}^{\left(i\right)} \left({x}_{k}, {Σ}_{k}\right) = IW \left({Σ}_{k}; {ν}_{k}^{\left(i\right)}; {V}_{k}^{\left(i\right)}\right) N \left({x}_{k}; {m}_{k}^{\left(i\right)}; {P}_{k}^{\left(i\right)}\right) ,$ these fixed-point iterations are started from the state and noise covariance estimate at the previous control step ${q}^{\left(∗\right)} \left({x}_{k - 1}, {Σ}_{k - 1}\right) = IW \left({Σ}_{k - 1}; {ν}_{k - 1}^{\left(∗\right)}; {V}_{k - 1}^{\left(∗\right)}\right) N \left({x}_{k - 1}; {m}_{k - 1}^{\left(∗\right)}; {P}_{k - 1}^{\left(∗\right)}\right) .$

This density is predicted forward in time through prediction models, yielding the estimate $IW \left({Σ}_{k}; {ν}_{k}^{-}; {V}_{k}^{-}\right) N \left({x}_{k}; {m}_{k}^{-}; {P}_{k}^{-}\right)$ that is used as a starting point for the fixed-point iterations at the next control step. These iterations are subsequently implemented with ${ν}_{k}^{\left(i+1\right)} = {ν}_{k}^{-} + 1$ ${\hat{Σ}}_{k}^{\left(i+1\right)} = {E}_{IW \left({Σ}_{k}; {ν}_{k}^{\left(i\right)}; {V}_{k}^{\left(i\right)}\right)} \left[{Σ}_{k}\right]$ ${S}_{k}^{\left(i+1\right)} = {H}_{k} {P}_{k}^{-} {\left({H}_{k}\right)}^{T} + {\hat{Σ}}_{k}^{\left(i+1\right)}$ ${K}_{k}^{\left(i+1\right)} = {P}_{k}^{-} {\left({H}_{k}\right)}^{T} {\left({S}_{k}^{\left(i+1\right)}\right)}^{- 1}$ ${m}_{k}^{\left(i+1\right)} = {m}_{k}^{-} + {K}_{k}^{\left(i+1\right)} \left({y}_{k}-h\left({m}_{k}^{-}\right)\right)$ ${P}_{k}^{\left(i+1\right)} = {P}_{k}^{-} - {K}_{k}^{\left(i+1\right)} {S}_{k}^{\left(i+1\right)} {\left({K}_{k}^{\left(i+1\right)}\right)}^{T}$ ${V}_{k}^{\left(i+1\right)} = {V}_{k}^{-} + \left({y}_{k}-h\left({m}_{k}^{\left(i+1\right)}\right)\left({y}_{k}-h{\left({m}_{k}^{\left(i+1\right)}\right)}^{T}+{H}_{k}{P}_{k}^{\left(i\right)}{\left({H}_{k}\right)}^{T}\right.\right. .$

These iterations can be run for a fixed number of steps, until the change in the updated parameters is sufficiently small, or a combination of both. For example, one convergence criterion can be defined as $\left‖{m}_{k}^{\left(i+1\right)}-{m}_{k}^{\left(i\right)}\right‖ \leq ε$ for some threshold *ε* > 0. In other embodiments, the fixed-point iterations are implemented using statistical linearizations akin to the moment-matching techniques used in linear regression Kalman filtering.

Figure 5D demonstrates how the variational Bayes Kalman filter can be implemented according to one embodiment of the invention. The information propagates from left to right in time, or control steps, and from input to output in the top of the schematic to the bottom of the schematic. Information that is necessarily stored in memory over the transition in time step (*k -* 1) 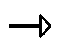 *k* and the transition *k* 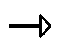 (*k* + 1) are indicated by the dotted lines 571d and 572d, respectively. In some embodiments, this information includes at least the parameters of the probability distribution *q*(***x***_{*k*-1}, ***Σ***_{*k*-1}), in this case the parameters of the inverse-Wishart 501d and Gaussian 502d densities. In this embodiment, the outputs are the parameters corresponding to the distribution at the control step *k q*(***x**ₖ, **Σ**ₖ*) in terms of the inverse-Wishart parameters 552d and the Gaussian parameters 553d.

Similarly, the algorithm takes two inputs per time step, indicated as crossing the input line 574d. The sampled measurements 504d of the measurement model and auxiliary signals from the sensing preprocessing, such as signal-to-noise ratios and known geometries 503d. Based on the inputs and the parameters stored in memory from the time step (*k* - 1) 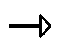 *k* 501d, 502d, and the auxiliary signals 503d, the parameters of *q*(***x***_{*k*-1}, ***∑***_{*k*-1}) are predicted forward in time 510d, 520d, producing the predicted inverse-Wishart parameters 511d and the predicted Gaussian parameters 521d, corresponding to the parameters of the density $IW \left({Σ}_{k}; {ν}_{k}^{-}; {V}_{k}^{-}\right) N \left({x}_{k}; {m}_{k}^{-}; {P}_{k}^{-}\right)$ defined in other embodiments. Based on these parameters and the measurements 504d associated with the measurement model, the variational update is done by iterating the fixed-point iterations described in association with Figure 5C. This results in updated parameters, and if the convergence criteria is not met 540d, these parameters are returned to perform yet another variational update 530d. This procedure is repeated until meeting the convergence criteria defined in other embodiments. At this point, the parameters of the density *q*(***x**ₖ, **∑**ₖ*) are set as the optimal solution produced by the fixed-point iterations 451d, the parameters associated with the updated inverse-Wishart density 522d and Gaussian density 523d are stored in memory until the next control step.

Some embodiments are based on the understanding that many tracking and control applications use multiple sensors of the same or different types to perform state estimation. For example, for vehicle tracking applications using GNSS measurements, a GNSS receiver of the vehicle receives measurements from multiple satellites. Hence, in this example, the tracking uses multiple measurements of the same type, i.e., coming from different sources using the same measurement principles, such as using measurements of satellite signals coming from different satellites. In addition, a vehicle can be equipped with a camera, radar, Lidar, etc., and the tracking of the vehicle can use multiple measurements of the same and different types, e.g., measurements of the satellite signals and camera measurements.

Some embodiments are based on recognizing that iterative updates of the measurement noise can be performed for each source of the measurements independently from each other. While the process noise acts on all types of measurements, the measurement noise is individual for each of the sources of the measurements. Hence, decoupling the process noise from the measurement noise allows for individual and independent updates of the portion of the measurement model corresponding to the specific measurement source. This in turn allows the evaluation of different reliabilities of different measurements and different control steps.

Consequently, one embodiment estimates the current state of the device by joining the measurements of the different measurement sources subject to the updated measurement noise determined individually, for each of the measurement sources.

To perform such joined updates of the state of the device while allowing individual updates of the measurement noise for different measurement sources, some embodiments organize the measurement noise in a block-diagonal matrix. Each block corresponds to a different measurement source allowing for individual blockwise updates. Together, the block diagonal matrix allows to update of the state jointly in a single update step.

The reason for the block-diagonal structure is that some embodiments realize that measurements from different sensors are sometimes independent of each other. For example, the noise of a camera, is different from the noise of an IMU.

Figure 5E shows an illustration of the block-diagonal structure of a measurement covariance according to some embodiments. For instance, the covariance matrix 510e is a matrix representing the covariance of the measurements stemming from three different types of sensors. For instance, the covariance 515e arises from a camera, the covariance 525e arises from a lidar, and the covariance 535e arises from an IMU. The submatrices in 510e, i.e., 515e, 525e, and 535e, can be of any square dimensions and can be any number of sensors.

Figure 5F shows a flowchart of a method for sequentially updating noise covariances of different noise sources wherein the covariance matrix of the set of sensors consists of a set of block-diagonal matrices, such as 510e in Figure 5E. Some embodiments realize that the sequential updating of noise sources is possible because the noise arises from different sources that generate different types of measurements, which are uncorrelated of each other in its noise statistics. First, the method determines 510f the estimation error 515f. Next, based on each covariance submatrix 515e, the method forms 520f the covariance 525f of the full set of measurements. For instance, the method forms 520f the covariance by concatenating the covariance ${\hat{Σ}}_{k}^{\left(i+1\right)}$ at iteration i as a blockdiagonal matrix ${\hat{Σ}}_{k}^{\left(j+1\right)} = blkdiag {\left(\left\{\frac{1}{{ν}_{k , i} - {n}_{i} - 1}{V}_{k , i}^{\left(j\right)}\right\}\right)}_{i ∈ {S}_{k}}$ for the set of sensors 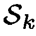 . Using the covariance 525f, the method updates 530f the state 535f. For example, some embodiments use a Kalman-like update according to ${S}_{k}^{\left(j+1\right)} = {H}_{k} {P}_{k}^{-} {H}_{k}^{⊤} + {\hat{Σ}}_{k}^{\left(j+1\right)}$ ${K}_{k}^{\left(j+1\right)} = {P}_{k}^{-} {H}_{k}^{⊤} {\left({S}_{k}^{\left(j+1\right)}\right)}^{- 1}$ ${m}_{k}^{\left(j+1\right)} = {m}_{k}^{-} + {K}_{k}^{\left(j+1\right)} \left({y}_{k}-{H}_{k}{m}_{k}^{-}\right)$ ${P}_{k}^{\left(j+1\right)} = {P}_{k}^{-} - {K}_{k}^{\left(j+1\right)} {S}_{k}^{\left(j+1\right)} {\left({K}_{k}^{\left(j+1\right)}\right)}^{⊤}$ to update the state and covariance of the state, wherein the Kalman gain ***K*** is dependent on the estimated measurement-noise covariance. Using the notation of variational Bayes Kalman filter, some embodiments perform iterative updates of the measurement covariance for each block, and then forms the full measurement covariance by $\begin{matrix}{\hat{Σ}}_{k} = {\left({E}_{{q}_{Σ} \left({Σ}_{k}\right)}\left[{Σ}_{k}^{- 1}\right]\right)}^{- 1} \\ = blkdiag \left({\left({E}_{{q}_{Σ}^{1} \left({Σ}_{k}^{1}\right)}\left[{\left({Σ}_{k}^{1}\right)}^{- 1}\right]\right)}^{- 1},…,{\left({E}_{{q}_{Σ}^{m} \left({Σ}_{k}^{m}\right)}\left[{\left({Σ}_{k}^{m}\right)}^{- 1}\right]\right)}^{- 1}\right) \\ = blkdiag \left(\frac{1}{{ν}_{k , 1} - {n}_{1} - 1}{V}_{k , 1},…,\frac{1}{{ν}_{k , m} - {n}_{m} - 1}{V}_{k , m}\right) , \\ {ν}_{k , i} = {ν}_{k , i}^{-} + 1\end{matrix}$

Where ${V}_{k , i} = {V}_{k , i}^{-} + \left({y}_{k}^{i}-{H}_{k}^{i}{m}_{k}\right) {\left({y}_{k}^{i}-{H}_{k}^{i}{m}_{k}\right)}^{⊤} + {H}_{k}^{i} {P}_{k} {\left({H}_{k}^{i}\right)}^{⊤}$ for each block *i*.

Figure 6A illustrates an exemplar sensor suite 104 used by the probabilistic filter 130 according to some embodiments. For example, the sensor suite 104 can include several cameras 602 mounted on different places of a vehicle, it can include one or several lidars 607 or radars 608 determining point clouds of the environment 600, and the inertial measurement unit (IMU) 601. Using radar or lidar in combination with camera 602 is beneficial since they are complementary. For instance, both radar and camera give measurements of the environment 600 indicative of a vehicle's location relative to the environment 600, but they are susceptible to different error sources. As a further compliment, the sensor suite 104 can include ultrasound sensors 609, which adds yet an alternative way to measure objects in the environment that can be used for localization.

Some embodiments leverage a prior map 605 stored in memory and used as an additional source of information that can be used for localization. For instance, by having the camera 602 measuring a lane marker of a road that is included in the map representation, the camera 602 can give global positioning information to complement a global navigation satellite system (GNSS) 603.

Using the information from the sensor suite 104, and a model of the sensor information, the probabilistic filter 130 maps sensor information to the state and estimates 130 the state according to principles described by other embodiments of this disclosure.

Some embodiments use a map of the environment 600 including lane markings of one or several lanes on a road, wherein the map has been constructed using a mobile mapping system (MMS). In some embodiments, the MMS is stored in a memory represented as discrete points. Other embodiments understand that as a vehicle moves on a road and a camera measures the lane markings of a road, the discrete points determined by the MMS may not well represent the camera measurements when using the camera to jointly localize the vehicle and align with the map.

A GNSS is a system of satellites that can be used for determining a geographic location of a mobile receiver with respect to earth. The GNSS may include GPS, Galileo, Glonass, QZSS, and BeiDou. An example of the GNSS is explained in detail in Figure 7A. Figure 7A shows a schematic of the GNSS, according to some embodiments. For instance, Nth satellite 702 transmits 720 and 721 code and carrier phase measurements to a set of receivers 730 and 731. For example, the receiver 730 is positioned to receive signals 710, 720, from N satellites 701, 703, 704, and 702. Similarly, the receiver 731 is positioned to receive signal 721 and 711 from the N satellites 701, 703, 704, and 702.

In various embodiments, the GNSS receiver 730 and 731 can be of different types. For example, in the exemplar embodiment of Figure 7A, the receiver 731 is a base receiver, whose position is known. For instance, the receiver 731 can be a receiver mounted on the ground. In contrast, the receiver 730 is a mobile receiver configured to move. For instance, the receiver 730 is mounted in a vehicle. In some implementations, the second receiver 731 is optional and can be used to remove, or at least decrease, uncertainties and errors due to various sources, such as atmospheric effects and errors in internal clocks of the receivers and satellites. In some embodiments, there are multiple GNSS receivers receiving code and carrier phase signals.

It is an objective of some embodiments to disclose a system and method for improving the satellite-based tracking of a state of a vehicle, wherein the vehicle is equipped with a GNSS receiver. It is another objective to provide such a system and method using unsynchronized cooperation of information received from satellite signals. It is yet another objective of some embodiments to provide such a system and method that is probabilistic, i.e., it accounts for probabilistic disturbances and error sources. It is an objective of other embodiments to track the state of a vehicle using different information from different sources, and not only rely on satellite signals. For example, in some embodiments the state of the vehicle is tracked using GNSS signals received from satellites using a GNSS receiver and a first and second moment of the probabilistic distribution of the state of the vehicle received from a remote server using a radio frequency (RF) receiver.

In certain scenarios, e.g., deep urban canyons, there are multiple distortions of satellite signals such that the information content in the code and carrier phase signals makes it difficult to perform high-precision state estimation. For instance, Figure 7B shows an illustration of a scenario where multipath disturbs the signals for the receiver 701b. The receiver 701b receives various signals 709b and 719b from satellites 710b and 720b. There are other satellites 730b and 740b that transmit signals 728b, 729b, 738b, 739b, but due to an obstruction 770b, for instance, a building in urban areas, these signals are not directly transmitted to the receiver.

Previously, the signal 738b sent from the satellite 740b was not available, but suddenly the satellite signal 739b reaches the receiver after a multipath event 702b. Such scenario can severaly detriment the performance of the probabilistic filter in tracking the state of the vehicle, because the probabilistic filter locks on to the wrong ambiguity estimate, causing a large estimation error.

Additionally, some embodiments are based on the realization that to perform certain advanced driver-assistance systems (ADAS) tasks, such as adaptive cruise control or short-term lane changes, it is sufficient to know the relative position and velocity to other vehicles, which can be measured by, e.g., ultrasound, radar, or camera. However, in many applications surrounding more advanced ADAS and vehicles with autonomous driving (AD) capabilities, it is not enough to know the relative position to surrounding vehicles that can be measured directly, but it is also critical to know state information relative to objects not even visible at a given time step from the vehicle having the AD capabilities. For example, in a route planning or multi-agent motion planning and coordination task, a control problem to be solved is to optimally coordinate vehicles toward different goals, with varying road surface quality, each passenger of a given vehicle with different priorities, e.g., related to driver comfort and other performance metrics. To identify which timed path a particular vehicle should take depends on the location of the own vehicle, timed paths of the other vehicles, and the environment setting for the road of interest.

Some embodiments are based on the realization that while the camera can be used to detect the relative motion to the road and surrounding objects in immediate vicinity of the vehicle with AD capabilities, the camera cannot provide a global position of the vehicle. Also, while distance sensors such as radar, lidar, and ultrasound, can detect relative motion similarly to the camera, it cannot be used as a sole sensor to position vehicles globally, unless accompanied with a map relating the sensor measurements to a location in the map with the vehicle.

Further, some embodiments are based on the recognition that GNSSs are prone to various disturbances and occlusion, e.g., from tall buildings in urban canyons. Some embodiments therefore complement the GNSS with additional sensing. For example, GNSS combined with additional sensing such as camera and lidar, can accomplish global positioning, as well as relative to an uncertain map and other objects, because the GNSSs provide the global positioning, and the additional sensing provides the relative positioning. Thus, in several localization estimation methods a multitude of sensors are used together to achieve vehicle localization with an aim of improving performance relative to what a sensor alone can provide.

To this end, various methods fuse GNSS measurements and measurements of a plurality of sensors, such as the sensors 601 - 603 of different types indicative of the state of a vehicle with respect to the map 605 of the environment, to estimate the state of the vehicle and the state of the map 605. The plurality of sensors may include one or a combination of a camera, a radar, a lidar, and the like. Additionally or alternatively, the plurality of sensors may include one or a combination of a camera producing color images, a depth sensor producing depth images, and a roadside unit (RSU) producing fused measurements of multiple remote sensors.

Using the measurements of the plurality of sensors is beneficial. Different sensors can complement each other, e.g., GNSS is dependent on whether the environment is urban or rural but not weather dependent, whereas the camera is independent on whether the environment is rural or urban but is sensitive to weather conditions and quality of the road to detect lane markings.

In some embodiments, the measurement sources are a combination of GNSS and camera measurements. For instance, one embodiment uses a camera to do relative measurements of landmarks relative to the camera. In some embodiments, the landmarks are corners of a wall in an indoor setting, in another embodiment the landmarks are line markings on a road for an outdoor setting. It is understood that it is possible to model various landmarks within the scope of the invention.

Figure 7C shows an illustration of different sensor measurements collected 311b according to various embodiments of the present disclosure. For instance, a first measurement of the collected measurements 311b is a camera measurement 710c that together with a computer vision algorithm measures the lane markings of the road, e.g., outputted as a polynomial of a given order, and a second measurement is a lidar measurement 720c that measures a distance to the environment, e.g., road barriers, side walls, and other vehicles. Additionally or alternatively, the measurements 311b are a combination of measurements that provide a measurement of the vehicle and an environment 730c, 740c, e.g., with the environment mapped offline a priori and updated online using a state of the map wherein the state of the map includes parameters of polynomials forming a spline that fits to the map representation points, wherein the prior parameters are optimized according to the corresponding spline's fit with the measurement according to other embodiments.

Figure 7D shows an illustration of a method for determining the predicted measurement from a state of the device. First, the method receives 710d the measurement model 715d from memory. Next, the method receives 720d the estimated state at the current time step, or control step, 725d. Using the estimated state 725d, the method inserts 730d the estimated state into the measurement model 715d, which results in a predicted measurement 745d of the measurement at the current control step.

Figure 7E shows an illustration of how measurements defined on different measurement spaces are transformed into the same measurement space for comparing each other, according to various embodiments of the present disclosure. Some embodiments transform a distribution 715e of a first measurement using a transformation 716e and transform a distribution 725e of a second measurement using a transformation 726e, to result in a distribution 735e of the first measurement, a distribution 745e of the second measurement, wherein the distributions are defined on the same measurement space 746e and can thus be compared and weighted to each other.

Some embodiments employ the different sensors by using a joint measurement model. For instance, referring to Figure 7D, some embodiments model the joint measurement model as a joint Gaussian distribution having a mean and covariance according to $y = {\left[{y}_{1} {y}_{2}\right]}^{T} = N \left({\left[\overline{h}\left(\overline{y}\right) \hat{h}\left(\hat{y}\right)\right]}^{T}\right) , \left[\begin{matrix}{R}_{1} & {R}_{12} \\ {R}_{21} & {R}_{2}\end{matrix}\right] ,$ wherein covariance elements R₁, R₁₂, and R₂, are measurement noise covariances determined by embodiments of the invention.

Figure 8 shows a block diagram of a method 800 for controlling a vehicle based on an estimated joint state 821, according to various embodiments of the present disclosure. Specifically, the method 800 may be implemented by an MPC that computes a control solution, e.g., a solution vector 855 by solving an inequality constrained optimization problem in a form of an optimal control structured program 850 at each control time step. The solution vector 855 includes a sequence of future optimal control inputs over a prediction time horizon of the system. Optimal control data 845 of a control cost function 840, equality and inequality constraints 830 in the optimization problem 850 depends on a dynamical model 825, vehicle constraints 820, the current estimated state of the vehicle and the map 821 and a control command that includes of a reference 805 and a confidence 806.

In some embodiments, the solution of the inequality constrained optimization problem 850 uses state and control values over the prediction time horizon from the previous control time step 810, which can be read from a memory of the MPC. This concept is called warm- or hot-starting of optimization algorithm, which considerably reduces the required computational effort of the MPC. In a similar manner, the corresponding solution vector 855 can be used to update and store a sequence of optimal or suboptimal state and control values for the next control time step 860.

In some embodiments of the present disclosure, the MPC adapts one or multiple terms in the control cost function 840 to the reference 805 and corresponding confidence 806 that are computed by the compound probabilistic filter 405a.

In one embodiment, the prediction model used by the probabilistic filter to predict the current state of the vehicle (e.g., current state) may be a motion model of state transitions of the vehicle subject to the process noise. An example of the motion model is described below in Figure 9A. In other embodiments, the prediction model used by the probabilistic filter to predict the current state of the map is that of a random walk with zero-mean Gaussian process noise, i.e., ***γ̅***_{***k**+*1} *= **γ̅ₖ** + **ω**_{γ}, **ω**_{γ}, ~* 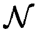 (**0**, ***Q**_{γ}*). Here, ***γ̅***_{*k*+1} denotes the map parameters at time step *k+1.*

Figure 9A shows an illustration of a motion model 900 employed in the probabilistic filter 130, according to some embodiments of the present disclosure. The motion model 900 is a single-track model, i.e., bicycle model, which has been shown to be valid in normal driving scenarios. In some embodiments, a state vector of the vehicle is *x =* (*p^{X}, p^{Y}, v^{X}, v^{Y}, ψ*)*,* i.e., the position, velocity, and heading rate of the vehicle. In some other embodiments, the time evolution of the vehicle is modeled by force moment balances as $m \left({\dot{v}}^{X}-{\dot{v}}^{Y}ψ\right) = {F}_{f}^{x} cos \left(δ\right) + {F}_{r}^{x} - {F}_{f}^{y} sin \left(δ\right) ,$ $m \left({\dot{v}}^{Y}+{\dot{v}}^{X}ψ\right) = {F}_{f}^{y} cos \left(δ\right) + {F}_{r}^{y} + {F}_{f}^{y} sin \left(δ\right) ,$ $I {ψ}^{¨} = {l}_{f} \left({F}_{f}^{y} cos\left(δ\right)+{F}_{f}^{y} sin\left(δ\right)\right) - {l}_{r} {F}_{r}^{y} ,$ where *m* is mass and *I* is inertia, and *F* with subscripts are forces acting on the vehicle. The resulting model is nonlinear, and in some embodiments the model is concisely written as ${x}_{k + 1} = f \left({x}_{k}, {u}_{k}\right) + {w}_{k}^{x}$*,* where ${w}_{k}^{x} ∼ N \left(0, {Q}^{x}\right)$, i.e., zero-mean Gaussian process noise.

In other embodiments, the single-track model is kinematic, i.e., it ignores force moment balances. For instance, in one embodiment, the kinematic single-track model is $\dot{z} = \left[\begin{matrix}\frac{{v}^{x} cos \left(ψ+β\right)}{cos \left(β\right)} \\ \frac{{v}^{x} sin \left(ψ+β\right)}{cos \left(β\right)} \\ {v}^{x} tan \left({δ}_{f}\right) / L\end{matrix}\right]$ wherein $z = \left({p}^{X}, {p}^{Y}, ψ\right) ∈ {ℝ}^{{n}_{z}}$ is the state.

Further, the state predicted (e.g., state 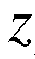 ) by the motion model 900 is updated using the measurement model. The measurement model used in the probabilistic filter 130 models the measurements (such as GNSS measurements and camera measurements). Some embodiments model the GNSS measurements as position measurements preprocessed by a probabilistic filter, e.g., a mixed-integer Kalman filter or a particle filter. Other embodiments model the camera measurements as distances to the lane markings of the road and an approximation of the road ahead, e.g., as illustrated in Figure 9B, where a camera measures a distance 910b to the lane markings of either lane or the lane markings as a polynomial expression 920b of the road ahead. Some other embodiments leverage a prior map of the road to relate the relative position measurements a camera gives, with global position measurements a GNSS gives. Further embodiments leverage inertial measurement unit including accelerometer and gyro to further enhance the vehicle state estimation. Some embodiments model the measurement model as Gaussian distributed according to *yₖ = h*(*xₖ, uₖ*) *+ eₖ,* where *eₖ* is zero-mean Gaussian distributed with a block-diagonal covariance matrix, wherein elements of a covariance matrix adjusted in the probabilistic filter 130, e.g., referring to Figure 3A and Figure 3B. Some embodiments are based on the recognition that typically the first two moments (e.g., mean and variance) describe a distribution well, even though the underlying distribution is not Gaussian. In some embodiments, this recognition is utilized in the determining the covariance of the vehicle state.

Some embodiments recognize that to include a polynomial approximation, i.e., a continuous representation, into the measurement model, discrete values are needed. Hence, such embodiments sample the polynomial function 920b at points - a point 930b, a point 940b, and a point 950b, as shown in Figure 9C, which can be included into the measurement model for updating the joint state 735a.

Some embodiments update parameters of probabilistic distribution, i.e., mean and covariance using the measurement model. For instance, one embodiment updates the parameters of probabilistic distribution using the Kalman filter (KF). Another embodiment acknowledges that the motion model and the measurement model is nonlinear for some states of the vehicle. To this end, some embodiments employ nonlinear KFs, such as linear-regression KF, to update the parameter of probabilistic distribution. Linear-regression KFs are filters that determine the first and second moment by having the moment integrals including 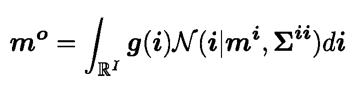 and ${Σ}^{oo} = {\int }_{{ℝ}^{I}} \left(g\left(i\right)-{m}^{o}\right) {\left(g\left(i\right)-{m}^{o}\right)}^{⊤} N \left(i\left|{m}^{i}, {Σ}^{ii}\right.\right) d i$ evaluated at a set of integration points $P = {\left\{\left({w}^{\left(i\right)}, {ξ}^{\left(i\right)}\right)\right\}}_{i = 1}^{K \left(I\right)}$.

Some embodiments approximate the posterior density for each probabilistic filter as the Gaussian approximation $p \left({\overline{x}}_{k}\left|{y}_{0 : k}\right.\right) \approx N \left({\hat{\overline{x}}}_{k \left|k\right.}, {P}_{k \left|k\right.}\right)$. Given an assumed Gaussian filtering posterior at time step *k*, distribution at time step *k+1* is subsequently approximated as a Gaussian, $p \left({\overline{x}}_{k + 1}\left|{\overline{x}}_{k}, {y}_{0 : k}\right.\right) \approx N \left({\overline{x}}_{k + 1}\left|{\hat{\overline{x}}}_{k + 1 \left|k\right.}, {P}_{k + 1 \left|k\right.}\right.\right) ,$ by direct evaluation of the associated moment integrals, ${\hat{\overline{x}}}_{k + 1 \left|k\right.} = \int \overline{f} \left({\overline{x}}_{k}\right) p \left({\overline{x}}_{k}\left|{y}_{0 : k}\right.\right) d {\overline{x}}_{k}$ ${P}_{k + 1 \left|k\right.} = \int \left(\overline{f}\left({\overline{x}}_{k}\right)-{\hat{\overline{x}}}_{k + 1 \left|k\right.}\right) {\left(⋆\right)}^{T} p \left({\overline{x}}_{k}\left|{y}_{0 : k}\right.\right) d {\overline{x}}_{k} + {Q}_{k} .$

Some embodiments assume the process noise enters additively, which considerably simplifies computations.

Some other embodiments leverage LRKFs for determining the associated moment integrals, wherein a set of integration points are used. For instance, some embodiments use integration points according to an unscented transform, other embodiments leverage a spherical cubature rule. However, any set of integration schemes can be used.

Figure 10A shows a block diagram of a controller 1000 for controlling the movement of a vehicle 1020a based on a joint state 1011a tracked using the GNSS and camera measurements, according to some embodiments of the present disclosure. The controller 1000 is implemented by the system 100, and the vehicle 1020a is equivalent to the vehicle 104. The controller 1000 is communicatively coupled to the vehicle 1020a. The controller 1000 includes a computer, e.g., in the form of a single central processing unit (CPU) or multiple CPU processors 1060a connected to a memory 1065a for storing a motion model 1040a, a measurement model 1041a, constraints 1042a and hypothesis of noise covariances 1043a of measurements of the vehicle 1020a and additionally different hypothesis of the map prior uncertainty. The processor(s) 1060a can be a single core microprocessor, a multi-core processor, a computing cluster, a network of multiple connected processors, or any number of other configurations. The memory 1065a can include random access memory (RAM), read only memory (ROM), flash memory, or any other suitable memory systems.

The controller 1000 executes the steps of the method described in various embodiments of the present invention to estimate the state of the vehicle 1020a. Based on the estimated joint state 1020a, the controller 1000 generates control inputs. The controller 1000 controls the vehicle 1020a based on control inputs corresponding to the joint state 1011a.

Some embodiments use a map of the environment 100a including lane markings of one or several lanes on a road, wherein the map has been constructed using a mobile mapping system (MMS). In some embodiments, the MMS is stored in a memory represented as discrete points. Other embodiments understand that as a vehicle moves on a road and a camera measures the lane markings of a road, the discrete points determined by the MMS may not well represent the camera measurements when using the camera to jointly localize the vehicle and align with the map.

To illustrate, Figure 10B illustrates a scenario where a vehicle 1060b drives close to a lane edge represented by lane markers. The map is represented by points 1010b - 1040b. A camera mounted on the vehicle 1060b is equipped with a computer-vision (CV) algorithm for determining a polynomial representation 1050b of the lane markings detected by the CV algorithm. The vehicle 1060b is located between two points of the map such that the polynomial representation 1050b is initialized between two points 1010b and 1020b. Hence, it is difficult to understand how to compare the camera measurement of the polynomial representation 1050b with the map to localize the vehicle 1060b.

Some embodiments recognize that to use the map in the update, a continuous representation is advantageous. Figure 10C shows an illustration of how to represent the map according to some embodiments. Specifically, a continuous map representation 1050c is constructed by fitting polynomials as a spline representation 1050c to the map points 1010c, 1020c, 1030c, and 1040c from the MMS. A spline is a set of piecewise polynomials defined by control points. For instance, the points 1010c through 1040c can be the control points and the spline can be fitted to best represent a polynomial defined by such points to give the spline representation 1050c.

In some embodiments the state to be estimated is the state of the vehicle and the state of the map, wherein the state of the map includes the coefficients of the one or several polynomials forming one or several splines. Using a spline representation enables to sample points from the spline that can arbitrary well align with the camera measurements and thus gives a straightforward way to compare various measurements, e.g., camera measurements, GNSS measurements, and the map.

A spline consists of a set of polynomials that are connected. Because the representation of a map is continuous, e.g., the lane markings of a lane of a road are continuous, the polynomials included in the spline are enforced continuity, either implicitly or explicitly.

Figure 10D shows an illustration where a polynomial 1050d is defined by the points 1010d through 1040d, and another polynomial 1040e is defined by the points 1040d, 1010e, 1020e, and 1030e. Some embodiments enforce continuity in the spatial location at the endpoint 1040d of polynomial 1050d and start point 1040d of polynomial 1040e. Other embodiments enforce continuity also along the velocity of the along the spline, wherein the parametrization to accomplish such continuity is described by other embodiments of the disclosure.

In one embodiment, the map from the MMS is outputted recursively as the vehicle traverses a road. For instance, the map points are outputted for a given horizon around the vehicle 104 with a fixed output rate. To this end, the discrete points are given in batches recursively, whereby continuity between splines are enforced similarly as between polynomials within a spline, as described by other embodiments of the disclosure.

Some embodiments are based on the understanding that the map, or the representation of the map, may be uncertain, because of several reasons.

For instance, an MMS maps the roads using high-cost sensors such as high-performance camera and lidar. However, even with such high-cost sensors there are inevitable imperfections that cause a certain loss of precision that incurs an uncertainty of the actual map location in world coordinates.

For instance, an MMS maps the streets in cities with a certain update rate, e.g., weeks or months. However, between such mapping instances there may have been changes to the roads that are not captured in the streets, e.g., due to resurfaced roads leading to new lane markings ending up in slightly different locations or temporary road constructions leading to changed lanes or rerouted streets.

Figure 10E illustrates a situation where the map points 1010e through 1040e have been transformed to a continuous spline representation 1050e according to some embodiments. Because of previously mentioned imperfections, some embodiments transfer the uncertainty of the map to an uncertainty of the continuous spline representation 1050e, leading to an uncertainty distribution 1050f. In some embodiments, such uncertainty distribution 1050f is used to balance the map update with the vehicle position update.

Figure 10F shows an illustration of a scenario where a vehicle 1010f travels on a road with lane markings 1020f and 1040f. However, the map stored in memory indicates that the lane markings are located at positions 1030f and 1050f, which are different from 1020f and 1040f. The camera measures the distance 1080f and 1090f to the lane markings 1020f and 1040f. However, as the map stored in memory differs from the true map, the camera measurements 1080f and 1090f corresponds to that the vehicle 1010f is located at a different place 1060f. Correspondingly, if the map update is trusted as a ground truth, the estimated vehicle position will be wrong.

Figure 10G shows an illustration of a scenario where the same vehicle, 1010f in Figure 10F, travels on the same road. In this scenario the estimated position 1010g is different from the true position. Consequently, with the measurements 1080g and 1090g, because the estimation believes the vehicle is located at 1010g, the measurements 1080f and 1090f are interpreted as being 1080g and 1090g, measured between the vehicle position 1010g and lane markings 1030g and 1040g. Consequently, if the map is to be updated, it will lead to the map being erroneously estimated at locations 1030g and 1040g.

To this end, some embodiments jointly estimate the vehicle state and the map parameters to consider possibilities of either the map or the vehicle state, or both being estimated with errors. In other words, by including a map the vehicle localization can be improved, and by including a vehicle state the online estimation of the map can be improved.

Some embodiments leverage that a probabilistic fusion of map and vehicle state is advantageous as by incorporating uncertainty, a degree of confidence can be leveraged to update the vehicle state and the state of the map. Doing in such a manner means that the fusion of information can balance between the relying on various sensors, the estimation of the state of the map, and the estimation of the state of the vehicle.

One embodiment is based on the realization that a map prior, represented by the splines with a probabilistic distribution over the spline parameters, needs to be regressed to a map that may be given as a set of *connected points* distributed in two- or three-dimensional space, so called *map points.* One embodiment does this by associating the *map points* to a specific spline segment, and formulating a regression to minimize a measure of total squared total variation error of the regressed road map with respect to the *map points*, as the L2-norm $TV \left(p\right) = {\left‖B\left(λ; P\right)-d\left(λ\right)\right‖}_{{C}_{2} \left(\left[0,1\right]\right)}^{2}$ which can be approximated by Riemann summation as $TV \left(p\right) \approx {\sum }_{i = 1}^{N} {\left(\left(α\left(λ\right)⊗{I}_{d}\right)p-{d}_{i}\right)}^{⊤} \left({Δ}_{i}{I}_{d}\right) \left(\left(α\left(λ\right)⊗{I}_{d}\right)p-{d}_{i}\right) = {p}^{⊤} Hp + {f}^{⊤} p + c$ where ${Δ}_{i} = \left\{\begin{matrix}{λ}_{i + 1} - {λ}_{i} & if i = 1 \\ {λ}_{i} - {λ}_{i - 1} & if i = N \\ \frac{1}{2} \left({λ}_{i + 1}-{λ}_{i - 1}\right) & otherwise\end{matrix}\right. .$

Such a cost function can be minimized analytically when posed without inequality constraints by inverting a linear system. This holds for any square integrable curve that is linear in the parameters used to represent the curve. As an example, but without loss of generality, for a Bezier curve in *d-*dimensional space, $H ≜ {A}^{⊤} NA , f ≜ - 2 {A}^{⊤} ND , c ≜ {D}^{⊤} ND ,$ $N = diag \left({Δ}_{1},…,{Δ}_{N}\right) ⊗ {I}_{d} , A = \left[\begin{matrix}α \left({λ}_{1}\right) \\ ⋮ \\ α \left({λ}_{N}\right)\end{matrix}\right] ⊗ {I}_{d} , D = \left[\begin{matrix}{d}_{1} \\ ⋮ \\ {d}_{N}\end{matrix}\right]$ with a solution $\hat{p} = {argmin}_{P} TV \left(p\right) = {\left({A}^{⊤}NA\right)}^{- 1} {A}^{⊤} ND .$

A feature of such a regression is that any uncertainty in the *map points* encoded as homogenous Gaussian noise on the sampled measurement from the road map can be propagated directly to an uncertainty in the spline parameters, i.e., in the parameters making up the state of the map. Again, without loss of generality, using the Bezier curve as an example, we obtain the following expression for the covariance matrix of the spline coefficients $Cov \left[\hat{p}\right] = {\left(2H\right)}^{- 1} AN {N}^{⊤} {A}^{⊤} {\left(2H\right)}^{- ⊤} {σ}^{2} .$

Where the last factor in the product is the variance of the noise associated with the *map points.* In other words, by having a prior measure of uncertainty of the map points, the spline parameters, i.e., the state of the map, naturally obtains an uncertainty prior.

Some embodiments are based on the realization that continuity constraints in the velocity can be enforced in the map, which will ensure that there is a one-to-one mapping between the Bezier curve as represented above with an *implicitly continuous* Bezier curve representation used in the estimator estimating the joint distribution of the state of the map and the state of the vehicle. One embodiment expresses a surjective nonlinear map, F, mapping a representation of the control points in the regression to the variables in the splines representing the map in the filter. Indeed, the distribution over the former can be mapped to the distribution of the latter through a first-order expansion, resulting in the approximate relationship 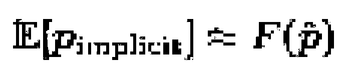 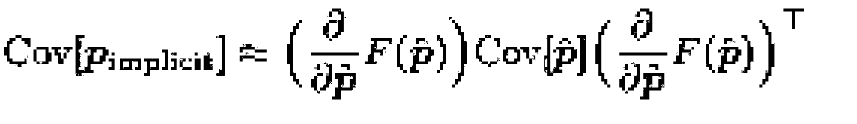 for assigning a prior uncertainty of the map.

Figure 10H shows an illustration of a parametrization of a spline enforcing continuity implicitly, i.e., by construction in the parametrization according to some embodiments. To explain Figure 10H, consider an arbitrary polynomial ${P}_{i} : \left[0, 1\right] \times {ℝ}^{{m}_{i}} ↦ {ℝ}^{d}$ parametrized in *λᵢ* ∈ [0, 1] and defined by a parameter vector ${γ}_{i} ∈ {ℝ}^{{m}_{i}}$. Some embodiments consider *d=3,* where the first two elements of the vector-valued polynomial is the Cartesian planar position and where the third element is a lane width. One embodiment constructs a spline 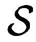 according to $S : \left[0, N\right] \times {ℝ}^{{m}_{i}} ↦ {ℝ}^{d}$, 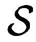 (*s*; *γ*₁, ..., *γ_{N}*) = 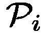 (*λᵢ*; *γᵢ*), $i = \left⌈s\right⌉$, *λᵢ* = *s* - *i* - 1 and introduce uncertainty in the map by assigning a Gaussian prior on ${γ}_{i} ∈ {ℝ}^{{m}_{i}}$. Some embodiments consider polynomials in the form of Bezier curves ${P}_{i} \left({λ}_{i}; {γ}_{i}\right) = {\sum }_{j = 0}^{{M}_{i}} {{\left(\begin{matrix}{M}_{i} \\ j\end{matrix}\right) {\left(1-{λ}_{i}\right)}^{{M}_{i} - j} {\left({λ}_{i}\right)}^{j}}_{︸}}_{{b}_{i , {M}_{i} , j}} {s}_{i , j}$ . Consequently, referring to Figure 10H, one embodiment enforces continuity of order n by considering ${s}_{i , k} = {s}_{i , 0} + {υ}_{i , k} , ∀ k = 1 , . . , n ,$ polynomials of order *2n+1* and let *s_{i,k}* = *s_{i,M}* - *v_{i,k},* ∀k = n + 1, .., 2n + 1, for a vector *v* . Hence, continuity is enforced by letting *v_{i,k}* = *-v_{i,M-k}*, ∀*k* = 1, ..., *n*, and continuity can be made implicit by including *v_{i,k}* in the parametrization, i.e., in ${γ}_{i} ∈ {ℝ}^{{m}_{i}}$.

Figure 11A shows a schematic of the vehicle 1020a including the controller 1000, according to some embodiments of the present disclosure. As used herein, the vehicle 1020a can be any type of wheeled vehicle, such as a passenger car, bus, or a rover. Also, the vehicle 1020a can be an autonomous or semi-autonomous vehicle. For example, some embodiments control the motion of the vehicle 1020a. Examples of the motion include lateral motion of the vehicle controlled by a steering system 1103 of the vehicle 1020a. In one embodiment, the steering system 1103 is controlled by the controller 1000. Additionally, or alternatively, the steering system 1103 can be controlled by a driver of the vehicle 1020a.

The vehicle can also include an engine 1106, which can be controlled by the controller 1000 or by other components of the vehicle 1020a. The vehicle 1002a can also include one or more sensors 1104 to sense the surrounding environment. Examples of the sensors 1104 include distance range finders, radars, lidars, and cameras, either mounted on the vehicle or on a road-side unit (RSU). The vehicle 1020a can also include one or more sensors 1105 to sense its current motion quantities and internal status. Examples of the sensors 1105 include global positioning system (GPS), accelerometers, inertial measurement units, gyroscopes, shaft rotational sensors, torque sensors, deflection sensors, pressure sensors, and flow sensors. The sensors provide information to the controller 1000. The vehicle can be equipped with a transceiver 1107 enabling communication capabilities of the controller 1000 through wired or wireless communication channels.

Figure 11B shows a schematic of interaction between the controller 1000 and controllers 1120 of the vehicle 1020a, according to some embodiments of the present disclosure. For example, in some embodiments, the controllers 1120 of the vehicle 1020a are a steering controller 1125 and a brake/throttle controllers 1130 that control rotation and acceleration of the vehicle 1020a. In such a case, the controller 1000 outputs control inputs to the controllers 1125 and 1130 to control the state of the vehicle 1020a. The controllers 1120 can also include high-level controllers, e.g., a lane-keeping assist controller 1135 that further process the control inputs of the controller 1000. In both cases, the controllers 1120 use the outputs of the controller 1000 to control at least one actuator of the vehicle, such as the steering wheel and/or the brakes of the vehicle 1020a, in order to control the motion of the vehicle 1020a.

Figure 12A shows a traffic scenario illustrating a scenario according to some embodiments. Some embodiments are based on recognition that road-side units (RSUs) are used to communicate information about the state of the map to other RSUs, which can be communicated to other vehicles. For example, the information about the state of the map estimated for a first vehicle at a first location can be shared with a second vehicle at a second location, such that the second vehicle has information about the state of the map of the first location, despite not having visited the first location.

To establish communication among vehicles and the RSUs, information transfer between RSUs and vehicles needs to go through core infrastructure network as shown in Figure 12A, where the communication between vehicle V1 1210a and cloud 1220a needs to go through RSU 1230a and core network 1240a, and communication between vehicle V1 and V2 1250a needs to go from RSU 1230a to RSU 1290a.

Other embodiments recognize that the various RSUs can be used to upload information about parts of the map to vehicles not having seen such particular part of the map previously.

Figure 12B shows a remote server 1200 for tracking a map using unsynchronized cooperation of information received from one or several RSUs transmitted over radio frequency (RF) channel 1239 according to some embodiments. The remote server 1200 includes a transmitter 1299 that transmits 1270 its belief of the state of the map to one or several RSUs and an RF receiver 1260 for receiving 1239 the first and second moment of the state of the map.

The server 1200 includes a memory 1280 that stores instructions to execute a probabilistic filter 1205 according to some embodiments of the disclosure. The probabilistic filter 1205 is equivalent to the compound probabilistic filter 130.

The remote server 1200 includes an RF measurement module 1240 that is operatively connected 1250 to the RF receiver 1260 that receives information 1239 transmitted over an RF channel from multiple vehicles. In some embodiments, the information includes a first moment and a second moment of maps observed from multiple vehicles.

Some embodiments recognize that some vehicles have measured the same road segment corresponding to the same spline segment, wherein the estimates of that part of the state of the map may have different mean and covariance. One embodiment determines the first and second moments of the state of the map using a distributed estimation scheme. For instance, one embodiment employs a consensus filter 1205.

In various embodiments, the remote server 1200 uses the first and second moment of similar parts of the map to update that segment of the map.

In other embodiments, the server 1200 includes the RF transmitter 1299 for transmitting 1270 the updated first and second moment, i.e., mean and covariance, that corresponds to a map segment. For example, referring to Figure 12C, the mean and covariance of a map segment 1230c measured from a vehicle 1210c is transmitted to a vehicle 1240c, which is located in a map segment 1220c.

Some embodiments implement the probabilistic filter 1205 as a consensus Kalman filter, wherein the estimates are combined by one of several consensus protocols defined by a set of weights $\left\{{w}_{ij}∈ℝ\left|i=1, …,N,j=1, …,N,{\sum }_{i} {w}_{ij} = 1\right.\right\}$ . For example, some embodiments use one of the three protocols

| | | |
|---|---|---|
| P1: | ${w}_{ij} ≜ {N}^{- 1} ,$ | ∀*i* ≠ *j*, |
| P2 : | ${w}_{ij} ≜ {\left({max}_{j ∈ {U}_{i}^{1}}\left\|{U}_{j}^{1}\right\|\right)}^{- 1} ,$ | ∀*i* ≠ *j*, |
| P3 : | ${w}_{ij} ≜ {\left(1+max\left(\left\|{U}_{i}^{1}\right\|, \left\|{U}_{j}^{1}\right\|\right)\right)}^{- 1} ,$ | ∀*i* ≠ *j*. |

One embodiment implements the consensus filter on information form with an information vector *γ*_{*k*|*k*} and information matrix Γ_{*k*|*k*} relating to the state mean estimate as ${\hat{x}}_{k \left|k\right.}^{i} = {\left({Γ}_{k \left|k\right.}^{ii}\right)}^{- 1} {γ}_{k \left|k\right.}^{i}$ and covariance as ${P}_{k \left|k\right.}^{ii} = {\left({Γ}_{k \left|k\right.}^{ii}\right)}^{- 1}$. In one embodiment the consensus filter is iterated at each time step, and the consensus protocols are implemented by having the nodes iterate their information vectors (and information matrices) with their neighbors over several steps according to ${\hat{γ}}_{k \left|k\right.}^{i , \left(n+1\right)} = {\sum }_{j ∈ {U}_{i}^{1}} {w}_{ij} {\hat{γ}}_{k \left|k\right.}^{j , \left(n\right)} , {Γ}_{k \left|k\right.}^{ii , \left(n+1\right)} = {\sum }_{j ∈ {U}_{i}^{1}} {w}_{ij} {Γ}_{k \left|k\right.}^{jj , \left(n\right)}$, for some iterations over n.

Other embodiments implement the filter 1205 as a fused Kalman filter, wherein the weights are determined based on a relative uncertainty of the estimates, ${w}_{ij} = \frac{Trace \left[{\left({Γ}_{k \left|k\right.}^{\left(n\right) , i}\right)}^{- 1}\right]}{{\sum }_{j ∈ {U}_{i}^{1}} Trace \left[{\left({Γ}_{k \left|k\right.}^{\left(n\right) , j}\right)}^{- 1}\right]}$.

Yet other embodiments employ weighted Kalman filters to propagate the mean estimate, by fusing a set of weight matrices ${\left\{{W}_{ij}\right\}}_{i = 1 , j = 1}^{i = N , j = N}$ subject to the constraints ***W**ᵢⱼ* = **0** if $j ∉ {U}_{i}^{1}$*,* ${\sum }_{j ∈ {U}_{i}^{1}} {W}_{ij} = I$.

In some embodiments, the weights are used to fuse the estimates as a weighted combination of estimates, wherein the weights are optimizing the weighted posterior covariance of the estimation error.

In other embodiments, there are multiple vehicles transmitting their estimates of the state of the map various RSUs. The transmitted estimate includes include the first moment and the second moment of the probabilistic distribution of the state of the map. Such information sending can be beneficial when the remote server, e.g., located in the RSU or in the cloud, does not have additional sensing capabilities. In such cases, the remote server can use the information received from multiple vehicles to either merge such information and therefore improve the estimation of the state of each vehicle and transmit the first and second moment to the vehicles, or to directly transmit information to other vehicles in the vicinity of the RSU.

In some embodiments, the probabilistic system of a vehicle transmits its probabilistic distribution of the state of the map and receives the first and second moment of the state of the map from other vehicles in response to the transmission.

In some embodiments, the remote server 1200 forms an augmented state based on the state of the multiple vehicles information about the map. The augmented state is a union of states of map states from multiple vehicles. For example, the augmented state includes a state of the map from multiple vehicles, where a vehicle has measured a subset of such map.

Some embodiments are based on recognition that using remote servers in communication with vehicles necessitates using different clocks for different devices, and synchronization among such clocks is necessary.

The clock of the vehicle can be synchronized to the clock of the GNSS in communication with GNSS receiver of the vehicle. However, some embodiments are based on recognition that individual synchronization of the clock of the vehicle to a clock of the GNSS does not guarantee the synchronization of the vehicles in the vehicular communication networks due to different clock offsets errors that different vehicles might have. In addition, the GNSS synchronization can be negatively affected by multipath of the satellite signals in the urban environment.

Different standards provide protocols for mutual synchronization of the clocks. For example, IEEE has been developing precision time protocol (PTP) based synchronization standards. However, those protocols require information exchange between synchronizing devices, which in the context of versatile vehicular communication network can be impractical.

Some embodiments are based on realization that vehicular communication network has special requirements on participating vehicles. Unlike node in other networks, a vehicle in a vehicular communication network periodically announces its presence. For example, in IEEE Dedicated Short Range Communications (DSRC) for Wireless Access in Vehicular Environments (WAVE), a vehicle is required to transmit a heartbeat message every 100ms to announce its presence to neighboring vehicles. The attributes of the heartbeat messages include one or combination of temporary ID, time, latitude, longitude, elevation, positional accuracy, speed and transmission, heading, acceleration, steering wheel angle, brake system status, and vehicle size.

Some embodiments are based on realization that this heartbeat message includes necessary synchronization data and therefore, can be used for synchronization. This approach reduces network traffic and mitigates the interference. With synchronization data transmitted automatically, vehicle can achieve silent synchronization without message exchange executed in conventional synchronization methods.

For example, some embodiments are based on realization that a clock of the vehicle can be synchronized to clocks of other vehicles based on trilateration of information received in multiple heartbeat messages under assumption that the clock offset of the vehicle and location of the vehicle are unknown. This is because the trilateration of the vehicle can be performed with two kinds of methods. One method uses distances that the light travels between the transmission and receipt time of the heartbeat message that is a function of the unknown clock offset. Another method uses distances between locations of the multiple vehicles and the time of transmitting the heartbeat messages and the unknown location of the vehicle at a particular time. By comparing these two kinds of distances it is possible to concurrently determine the unknown clock offset and unknown location of the vehicle at a particular time.

Figure 12D illustrates a use case 1200d related to synchronization message exchange in IEEE Precision Time Protocol (PTP) based synchronization. Such a synchronization requires at least two message exchanges between a master 1200d1 and a slave 1200d2. The master 1200d1 first sends a Sync message to the slave 1200d2 at time T₁. The slave 1200d2 receives Sync message at time T₂. Even Sync message contains the timestamp T₁, for more precise synchronization, the master 1200d1 may send a Follow_Up message that contains the precise timestamp T₁ to the slave 1200d2. After processing Sync message and Follow_Up message received from the master 1200d1, the slave 1200d2 sends a Delay_Req message to master at time T₃. Once the master 1200d1 receives the Delay_Req message at time T₄, it sends back a Delay_Resp message that contains timestamp T₄ to the slave 1200d2. Using four timestamps T₁, T₂, T₃ and T₄, the slave 1200d2 computes message propagation time and clock offset, and therefore, synchronizes its clock to master's clock. For example, for symmetric link, the propagation time tₚ and clock offset tₒ can be computed as ${t}_{p} = \frac{\left({T}_{4}-{T}_{1}\right) - \left({T}_{3}-{T}_{2}\right)}{2}$ (1) and ${t}_{o} = \frac{\left({T}_{2}-{T}_{1}\right) + \left({T}_{3}-{T}_{4}\right)}{2}$ (2).

In some embodiments, the parameters of probabilistic distribution of the state of the vehicle together with the GNSS measurements are transmitted to the remote server.

### Exemplar embodiments

Figure 13 shows an example of a vehicle-to-vehicle (V2V) communication and planning based on state estimation according to one embodiment. As used herein, each vehicle can be any type of moving transportation system, including a passenger car, a mobile robot, or a rover. For example, the vehicle can be an autonomous or semi-autonomous vehicle.

In this example, multiple vehicles - a vehicle 1300, a vehicle 1310, and a vehicle 1320, are moving on a given freeway 1301. Each vehicle can make many motions. For example, the vehicles can stay on the same path - such as a path 1350, a path 1390, a path 1380, or can change paths (or lanes) such a lane 1360, or a lane 1370. Each vehicle has its own sensing capabilities, e.g., Lidars, cameras, GNSS, etc. Each vehicle has the possibility to transmit and receive 1330, 1340 information with its neighboring vehicles and/or can exchange information indirectly through other vehicles via a remote server. For example, the vehicle 1300 and the vehicle 1320 can exchange information through the vehicle 1310. With this type of communication network, the information can be transmitted over a large portion of the freeway or highway 1301.

Some embodiments are configured to address the following scenario. For example, the vehicle 1320 wants to change its path and chooses option 1370 in its path planning. However, at the same time vehicle 1310 also chooses to change its lane and wants to follow option 1360. In this case, the two vehicles might collide, or at best the vehicle 1310 will have to execute an emergency brake to avoid colliding with the vehicle 1320. This is where the present disclosure can help. To that end, some embodiments enable the vehicles to transmit not only what the vehicles sense at the present time instant t, but also, additionally or alternatively, transmit what the vehicles are planning to do at time *T* + *δ_{t.}*

In the example of Figure 13, the vehicle 1320 informs of its plan to change lane to the vehicle 1310 after planning and committing to execute its plan. Thus, the vehicle 1310 knows that in *δₜ* time interval the vehicle 1320 is planning to make a move to its left 1370. Accordingly, the vehicles 1310 can select the motion 1390 instead of 1360, i.e., staying on the same lane.

Additionally or alternatively, the motion of the vehicles can be jointly controlled by the remote server 1200 based on state estimations determined cooperatively. For example, in some embodiments, the multiple vehicles determined for joint state estimation are the vehicles that form and potentially can form a platoon of vehicles jointly controlled with shared control objective.

Figure 14 is a schematic of a multi-vehicle platoon shaping for accident-avoidance scenario according to one embodiment. For example, consider a group of vehicles 1430, 1470, 1450, 1460, moving on a freeway 1401. Consider now that suddenly, there is a rerouting 1400 of the road ahead of the vehicle platoon. This rerouting renders the zone 1400 unsafe for the vehicles to move according to the nominal plan. The vehicles 1420, 1460 sense the problem for example with a camera, and communicate this information to the vehicles 1430, 1470. The platoon then executes a distributed optimization algorithm, e.g., formation keeping multi-agent algorithm, which selects the best shape of the platoon to maneuver according to the rerouting 1400 and to keep the vehicle flow uninterrupted. In this illustrative example, the best shape of the platoon is to align and form a line 1495, avoiding potential collisions because of the rerouting 1400.

Figure 15A illustrates an embodiment 1500a where an unmanned aerial vehicle (UAV) is controlled using the system 100 implemented on a server 1510a, according to some embodiments of the present disclosure. The server 1510a executes the various operations described in conjunction with Figure. 10A - Figure. 10H disclosed earlier. A vehicle 1520a equivalent to the vehicle 104 is a UAV, executes the operations performed by the system 100. The vehicle 1520a may transmit data 1530a of its own state and/or environmental data back to the server 1510a. In some embodiments, a motion plan 1555 based on joint tracking of the vehicle 1520a and a map state as generated by the system 100 is updated continuously as additional information is gathered on the disturbance and the environment. The information on the disturbance and the environment may be gathered by the vehicle 1520a itself, or by any third-party sensors 1531a, 1532a, 1533a. The sensors 1531a, 1532a, 1533a may be physical sensors, such as a LiDAR measuring wind speeds, or non-physical sensors, such as meteorological forecasts of the wind speeds or ocean currents, depending on the vehicle 1520a considered.

Figure 15B illustrates another embodiment where the steps of the system 100 is implemented on a server 1510b, according to some embodiments of the present disclosure. The communication is the same as in Figure 15A, i.e., motion plans 1531b, 1532b, and 1533b are transmitted to vehicles 1521b, 1522b, and 1523b, respectively. In contrast to the embodiment described in Figure 15A, the vehicles 1521b, 1522b, and 1523b include sensory equipment (onboard sensors) whereby the disturbance can be measured. As such, communications 1541b, 1542b, and 1543b to the server 1510b include measurements on the disturbance. In this embodiment, there is no need for any additional external sensing, but some embodiments combine the external sensors 1531a, 1532a, 1533a with the onboard sensing. In other embodiments, the server 1510b is run physically on the vehicle as a component of its larger control system.

Figure 16 shows a block diagram of a system 1600 for direct and indirect control of mixed-autonomy vehicles in accordance with some embodiments. The system 1600 can be arranged on a remote server as part of RSU to control the passing mixed-autonomy vehicles including autonomous, semiautonomous, and/or manually driven vehicles. The system 1600 can have a number of interfaces connecting the system 1600 with other machines and devices. A network interface controller (NIC) 1602 includes a receiver adapted to connect the system 1600 through the bus 1604 to a network 1606 connecting the system 1600 with the mixed-automata vehicles to receive a traffic state of a group of mixed-autonomy vehicles traveling in the same direction, wherein the group of mixed-autonomy vehicles includes controlled vehicles willing to participate in a platoon formation and at least one uncontrolled vehicle, and wherein the traffic state is indicative of a state of each vehicle in the group and the controlled vehicle. For example, in one embodiment the traffic state includes current headways, current speeds, and current acceleration of the mixed-automata vehicles. In some embodiments, the mixed-automata vehicles include all uncontrolled vehicles within a predetermined range from flanking controlled vehicles in the platoon.

The NIC 1602 also includes a transmitter adapted to transmit the control commands to the controlled vehicles via the network 1606. To that end, the system 1600 includes an output interface, e.g., a control interface 1608, configured to submit the control commands 1610 to the controlled vehicles in the group of mixed-autonomy vehicles through the network 1606. In such a manner, the system 1600 can be arranged on a remote server in direct or indirect wireless communication with the mixed-automata vehicles.

The system 1600 can also include other types of input and output interfaces. For example, the system 1600 can include a human machine interface 1612. The human machine interface 1612 can connect the controller to a keyboard 1614 and pointing device 1616, wherein the pointing device 1616 can include a mouse, trackball, touchpad, joystick, pointing stick, stylus, or touchscreen, among others.

The system 1600 includes a processor 1618 configured to execute stored instructions, as well as a memory 1620 that stores instructions that are executable by the processor. The processor 1618 can be a single core processor, a multi-core processor, a computing cluster, or any number of other configurations. The memory 1620 can include random access memory (RAM), read only memory (ROM), flash memory, or any other suitable memory machines. The processor 1618 can be connected through the bus 1604 to one or more input and output devices.

The processor 1618 is operatively connected to a memory storage 1622 storing the instruction as well as processing data used by the instructions. The storage 1622 can form a part of or be operatively connected to the memory 1620. For example, the memory can be configured to store a probabilistic filter 1624 trained to track the augmented state of mixed-automata vehicles, transform the traffic state into target headways for the mixed-autonomy vehicles; and store a one or multiple models 1626 configured to explain the motion of the vehicles. For example, the models 1626 can include motion models, measurement models, traffic models, and the like.

The processor 1618 is configured to determine control commands for the controlled vehicles that indirectly control the uncontrolled vehicles as well. To that end, the processor is configured to execute a control generator 1628 to determine control commands based on the state of the vehicles. In some embodiments, the control generator 1628 uses a deep reinforcement learning (DRL) controller trained to generate control command from the augmented state for individual and/or a platoon of vehicles.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicated like elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine-readable medium. A processor(s) may perform the necessary tasks.

Various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments.

Embodiments of the present disclosure may be embodied as a method, of which an example has been provided. The acts performed as part of the method may be ordered in any suitable way. Accordingly, embodiments may be constructed in which acts are performed in an order different than illustrated, which may include performing some acts concurrently, even though shown as sequential acts in illustrative embodiments.

Further, embodiments of the present disclosure and the functional operations described in this specification can be implemented in digital electronic circuitry, in tangibly embodied computer software or firmware, in computer hardware, including the structures disclosed in this specification and their structural equivalents, or in combinations of one or more of them. Further some embodiments of the present disclosure can be implemented as one or more computer programs, i.e., one or more modules of computer program instructions encoded on a tangible non transitory program carrier for execution by, or to control the operation of, data processing apparatus. Further still, program instructions can be encoded on an artificially generated propagated signal, e.g., a machine-generated electrical, optical, or electromagnetic signal, which is generated to encode information for transmission to suitable receiver apparatus for execution by a data processing apparatus. The computer storage medium can be a machine-readable storage device, a machine-readable storage substrate, a random or serial access memory device, or a combination of one or more of them.

According to embodiments of the present disclosure the term "data processing apparatus" can encompass all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code.

A computer program can be deployed to be executed on one computer or on multiple computers that are located at one site or distributed across multiple sites and interconnected by a communication network. Computers suitable for the execution of a computer program include, by way of example, can be based on general or special purpose microprocessors or both, and any other kind of central processing unit. Generally, a central processing unit will receive instructions and data from a read only memory or a random-access memory or both. The essential elements of a computer are a central processing unit for performing or executing instructions and one or more memory devices for storing instructions and data.

Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

## Claims

1. A system (100, 200) using a probabilistic filter (130) for tracking a state of a device (104) under control, comprising: at least one processor (202a); and at least one memory (204a) having instructions stored thereon that, when executed by the at least one processor (202a), causes the system (100, 200) to:
execute the probabilistic filter (130) over a sequence of control steps to track a change in the state of the device (104) caused by the control steps, wherein for each of the control steps, the probabilistic filter (130) uses a prediction model (305a, 305b) subject to prediction noise to estimate a current state of the device (104) and uses a measurement model subject to measurement noise to update the estimate of the current state of the device (104) based on measurements of the state of the device (104); and
output data indicative of the tracked state of the device (104),
wherein
for at least some of the control steps, the probabilistic filter (130) executes the measurement model more times than the prediction model (305a, 305b),
wherein, during a current control step, the probabilistic filter (130) is configured to:
execute the prediction model (305a, 305b) to update a previous state of the device (104) determined during a previous control step to predict the current state of the device (104);
collect a feedback signal including the measurements indicative of the current state of the device (104);
update the predicted current state by executing the measurement model configured to update the predicted current state of the device (104) based on the measurements, to produce the estimate of the current state of the device (104); and
execute the measurement model iteratively until a termination condition is met, wherein for each iteration, the probabilistic filter (130) is configured to:
update the estimate of the current state of the device (104) with the measurement model subject to the measurement noise updated during a previous iteration; and
update the measurement noise based on a correlation of the measurements with the updated estimate of the current state of the device (104),
**characterized in that**,
to determine the correlation of the measurements, the probabilistic filter (130) is configured to:
center a mean of a probabilistic distribution representing the measurement noise on predicted measurements generated by transforming one or a combination of the predicted current state of the device (104) and the estimate of the current state of the device (104) to measurement space; and
update a variance of the probabilistic distribution to increase likelihood of sampling the measurements on the probabilistic distribution with the updated variance.

2. The system (100, 200) of claim 1, wherein to update the variance of the probabilistic distribution, the execution of the probabilistic filter (130) for each control step is configured to:
determine an estimation error between the measurements and the predicted measurements;
iteratively, until a termination condition is met, update the state of the device (104) based on a variance determined during a previous iteration and the estimation error between the measurements and the predicted measurements, and update the variance based on a combination of the variance determined during a previous control step and the state of the device (104) updated in the current iteration.

3. A method for tracking a state of a device (104) under control using a probabilistic filter (130), wherein the method uses a processor (202a) coupled with stored instructions implementing the method, wherein the instructions, when executed by the processor (202a) carry out steps of the method, comprising:
executing the probabilistic filter (130) over a sequence of control steps to track a change in the state of the device (104) caused by the control steps, wherein for each of the control steps, the probabilistic filter (130) uses a prediction model (305a, 305b) subject to prediction noise to estimate a current state of the device (104) and uses a measurement model subject to measurement noise to update the estimate of the current state of the device (104) based on measurements of the state of the device (104); and
outputting data indicative of the tracked state of the device (104);
wherein
for at least some of the control steps, the probabilistic filter (130) executes the measurement model more times than the prediction model (305a, 305b),
wherein, during a current control step, the method comprises:
executing the prediction model (305a, 305b) to update a previous state of the device (104) determined during a previous control step to predict the current state of the device (104);
collecting a feedback signal including the measurements indicative of the current state of the device (104);
updating the predicted current state by executing the measurement model configured to update the predicted current state of the device (104) based on the measurements, to produce the estimate of the current state of the device (104); and
executing the measurement model iteratively until a termination condition is met, wherein for each iteration, the probabilistic filter (130) is configured for
updating the estimate of the current state of the device (104) with the measurement model subject to the measurement noise updated during a previous iteration; and
updating the measurement noise based on a correlation of the measurements with the updated estimate of the current state of the device (104),
**characterized in that**,
to determine the correlation of the measurements, the method comprises:
centering a mean of a probabilistic distribution representing the measurement noise on predicted measurements generated by transforming one or a combination of the predicted current state of the device (104) and the estimate of the current state of the device (104) to measurement space; and
updating a variance of the probabilistic distribution to increase likelihood of sampling the measurements on the probabilistic distribution with the updated variance.

## Patentansprüche

1. System (100, 200), das ein probabilistisches Filter (130) zur Verfolgung eines Zustands einer gesteuerten Vorrichtung (104) verwendet, umfassend: mindestens einen Prozessor (202a); und mindestens einen Speicher (204a), in dem Anweisungen gespeichert sind, die, wenn sie von dem mindestens einen Prozessor (202a) ausgeführt werden, das System (100, 200) veranlassen zum:
Ausführen des probabilistischen Filters (130) über eine Abfolge von Steuerungsschritten, um eine durch die Steuerungsschritte verursachte Änderung des Zustands der Vorrichtung (104) zu verfolgen, wobei das probabilistische Filter (130) für jeden der Steuerungsschritte ein Vorhersagemodell (305a, 305b), das Vorhersage-Rauschen unterliegt, zum Schätzen eines aktuellen Zustands der Vorrichtung (104) verwendet und ein Messmodell, das einer Messstörung unterliegt, verwendet, um die Schätzung des aktuellen Zustands der Vorrichtung (104) auf der Grundlage von Messungen des Zustands der Vorrichtung (104) zu aktualisieren; und
Ausgeben von Daten, die den erfassten Zustand der Vorrichtung (104) angeben,
wobei
bei zumindest einigen der Steuerungsschritte das probabilistische Filter (130) das Messmodell häufiger als das Vorhersagemodell (305a, 305b) ausführt,
wobei das probabilistische Filter (130) während eines aktuellen Steuerungsschritts eingerichtet ist, zum:
Ausführen des Vorhersagemodells (305a, 305b), um einen früheren Zustand der Vorrichtung (104), der während eines vorherigen Steuerungsschritts bestimmt wurde, zu aktualisieren, um den aktuellen Zustand der Vorrichtung (104) vorherzusagen;
Erfassen eines Rückmeldungssignals, das die Messungen enthält, die den aktuellen Zustand der Vorrichtung angeben (104);
Aktualisieren des vorhergesagten aktuellen Zustands durch Ausführen des Messmodells, das eingerichtet ist, den vorhergesagten aktuellen Zustand der Vorrichtung (104) auf der Grundlage der Messungen zu aktualisieren, um die Schätzung des aktuellen Zustands der Vorrichtung (104) zu erzeugen; und
iteratives Ausführen des Messmodells bis eine Abbruchbedingung erfüllt ist, wobei das probabilistische Filter (130) für jede Iteration eingerichtet ist zum:
Aktualisieren der Schätzung des aktuellen Zustands der Vorrichtung (104) mit dem Messmodell, das der während einer vorherigen Iteration aktualisierten Messstörung unterliegt; und
Aktualisieren der Messstörung auf der Grundlage einer Korrelation der Messungen mit der aktualisierten Schätzung des aktuellen Zustands der Vorrichtung (104),
**dadurch gekennzeichnet, dass**
zum Bestimmen der Korrelation der Messungen, das probabilistische Filter (130) eingerichtet ist, zum:
Zentrieren eines Mittelwerts einer probabilistischen Verteilung, die die Messstörung bei vorhergesagten Messungen darstellt, die durch Transformation eines von dem vorhergesagten aktuellen Zustand der Vorrichtung (104) und der Schätzung des aktuellen Zustands der Vorrichtung (104) oder deren Kombination erzeugt werden, in den Messraum; und
Aktualisieren einer Varianz der probabilistischen Verteilung, um eine Wahrscheinlichkeit des Abtastens der Messungen an der probabilistischen Verteilung mit der aktualisierten Varianz zu erhöhen.

2. System (100, 200) nach Anspruch 1, wobei zum Aktualisieren der Varianz der probabilistischen Verteilung das Ausführen des probabilistischen Filters (130) für jeden Steuerungsschritt eingerichtet ist zum:
Bestimmen eines Schätzfehlers zwischen den Messungen und den vorhergesagten Messungen;
iteratives Aktualisieren, bis eine Abbruchbedingung erfüllt ist, des Zustands der Vorrichtung (104) auf der Grundlage einer während einer vorherigen Iteration bestimmten Varianz und des Schätzfehlers zwischen den Messungen und den vorhergesagten Messungen, und Aktualisieren der Varianz auf der Grundlage einer Kombination aus der während eines vorherigen Steuerungsschritts bestimmten Varianz und dem in der aktuellen Iteration aktualisierten Zustand der Vorrichtung (104).

3. Verfahren zum Verfolgen eines Zustands einer gesteuerten Vorrichtung (104) unter Verwendung eines probabilistischen Filters (130), wobei das Verfahren einen Prozessor (202a) verwendet, der mit gespeicherten Anweisungen gekoppelt ist, die das Verfahren implementieren, wobei die Anweisungen bei ihrer Ausführung durch den Prozessor (202a) Schritte des Verfahrens ausführen, umfassend:
Ausführen des probabilistischen Filters (130) über eine Abfolge von Steuerungsschritten, um eine durch die Steuerungsschritte verursachte Änderung des Zustands der Vorrichtung (104) zu verfolgen, wobei das probabilistische Filter (130) für jeden der Steuerungsschritte ein Vorhersagemodell (305a, 305b), das Vorhersage-Rauschen unterliegt, zum Schätzen eines aktuellen Zustands der Vorrichtung (104) verwendet und ein Messmodell, das einer Messstörung unterliegt, verwendet, um die Schätzung des aktuellen Zustands der Vorrichtung (104) auf der Grundlage von Messungen des Zustands der Vorrichtung (104) zu aktualisieren; und
Ausgeben von Daten, die den verfolgten Zustand der Vorrichtung (104) angeben; wobei
bei zumindest einigen der Steuerungsschritte das probabilistische Filter (130) das Messmodell häufiger als das Vorhersagemodell (305a, 305b) ausführt,
wobei, während eines aktuellen Steuerungsschritts, das Verfahren umfasst:
Ausführen des Vorhersagemodells (305a, 305b), um einen früheren Zustand der Vorrichtung (104), der während eines vorherigen Steuerungsschritts bestimmt wurde, zu aktualisieren, um den aktuellen Zustand der Vorrichtung (104) vorherzusagen;
Erfassen eines Rückmeldungssignals, das die Messungen enthält, die den aktuellen Zustand der Vorrichtung (104) angeben;
Aktualisieren des vorhergesagten aktuellen Zustands durch Ausführen des Messmodells, das eingerichtet ist, den vorhergesagten aktuellen Zustand der Vorrichtung (104) auf der Grundlage der Messungen zu aktualisieren, um das Schätzen des aktuellen Zustands der Vorrichtung (104) zu erzeugen; und
iteratives Ausführen des Messmodells bis eine Abbruchbedingung erfüllt ist, wobei das probabilistische Filter (130) bei jeder Iteration eingerichtet ist zum:
Aktualisieren der Schätzung des aktuellen Zustands der Vorrichtung (104) mit dem Messmodell, das der während einer vorherigen Iteration aktualisierten Messstörung unterliegt; und
Aktualisieren der Messstörung auf der Grundlage einer Korrelation der Messungen mit der aktualisierten Schätzung des aktuellen Zustands der Vorrichtung (104),
**dadurch gekennzeichnet, dass**
zum Bestimmen der Korrelation der Messungen das Verfahren umfasst:
Zentrieren des Mittelwerts einer probabilistischen Verteilung, die die Messstörung bei den vorhergesagten Messungen darstellt, die durch Transformation eines von dem vorhergesagten aktuellen Zustand der Vorrichtung (104) und der Schätzung des aktuellen Zustands der Vorrichtung (104) oder deren Kombination erzeugt werden, in den Messraum; und
Aktualisieren einer Varianz der probabilistischen Verteilung, um eine Wahrscheinlichkeit des Abtastens der Messungen an der probabilistischen Verteilung mit der aktualisierten Varianz zu erhöhen.

## Revendications

1. Un système (100, 200) utilisant un filtre probabiliste (130) pour suivre un état d'un dispositif (104) sous commande, comprenant : au moins un processeur (202a) ; et au moins une mémoire (204a) ayant des instructions stockées sur celle-ci qui, lorsqu'elles sont exécutées par l'au moins un processeur (202a), amènent le système (100, 200) à :
exécuter le filtre probabiliste (130) sur une séquence d'étapes de commande pour suivre un changement de l'état du dispositif (104) provoqué par les étapes de commande, dans lequel pour chacune des étapes de commande, le filtre probabiliste (130) utilise un modèle de prédiction (305a, 305b) soumis à un bruit de prédiction pour estimer un état courant du dispositif (104) et utilise un modèle de mesure soumis à un bruit de mesure pour mettre à jour l'estimation de l'état courant du dispositif (104) sur la base de mesures de l'état du dispositif (104) ; et
émettre des données indicatives de l'état suivi du dispositif (104),
dans lequel
pour au moins certaines des étapes de commande, le filtre probabiliste (130) exécute le modèle de mesure plus de fois que le modèle de prédiction (305a, 305b),
dans lequel, pendant une étape de commande courante, le filtre probabiliste (130) est configuré pour :
exécuter le modèle de prédiction (305a, 305b) pour mettre à jour un état précédent du dispositif (104) déterminé pendant une étape de commande précédente pour prédire l'état courant du dispositif (104) ;
collecter un signal de rétroaction incluant les mesures indicatives de l'état courant du dispositif (104) ;
mettre à jour l'état courant prédit en exécutant le modèle de mesure configuré pour mettre à jour l'état courant prédit du dispositif (104) sur la base des mesures, pour produire l'estimation de l'état courant du dispositif (104) ; et
exécuter le modèle de mesure de manière itérative jusqu'à ce qu'une condition de terminaison soit satisfaite, dans lequel pour chaque itération, le filtre probabiliste (130) est configuré pour :
mettre à jour l'estimation de l'état courant du dispositif (104) avec le modèle de mesure soumis au bruit de mesure mis à jour pendant une itération précédente ; et
mettre à jour le bruit de mesure sur la base d'une corrélation des mesures avec l'estimation mise à jour de l'état courant du dispositif (104),
**caractérisé en ce que**,
pour déterminer la corrélation des mesures, le filtre probabiliste (130) est configuré pour :
centrer une moyenne d'une distribution probabiliste représentant le bruit de mesure sur des mesures prédites générées en transformant l'un ou une combinaison de l'état courant prédit du dispositif (104) et de l'estimation de l'état courant du dispositif (104) dans l'espace de mesure ; et
mettre à jour une variance de la distribution probabiliste pour augmenter la vraisemblance d'échantillonnage des mesures sur la distribution probabiliste avec la variance mise à jour.

2. Le système (100, 200) de la revendication 1, dans lequel pour mettre à jour la variance de la distribution probabiliste, l'exécution du filtre probabiliste (130) pour chaque étape de commande est configurée pour :
déterminer une erreur d'estimation entre les mesures et les mesures prédites ;
itérativement, jusqu'à ce qu'une condition de terminaison soit satisfaite, mettre à jour l'état du dispositif (104) sur la base d'une variance déterminée pendant une itération précédente et l'erreur d'estimation entre les mesures et les mesures prédites, et mettre à jour la variance sur la base d'une combinaison de la variance déterminée pendant une étape de commande précédente et de l'état du dispositif (104) mis à jour dans l'itération courante.

3. Un procédé de suivi d'un état d'un dispositif (104) sous commande à l'aide d'un filtre probabiliste (130), dans lequel le procédé utilise un processeur (202a) couplé à des instructions stockées mettant en œuvre le procédé, dans lequel les instructions, lorsqu'elles sont exécutées par le processeur (202a), réalisent des étapes du procédé, comprenant :
l'exécution du filtre probabiliste (130) sur une séquence d'étapes de commande pour suivre un changement de l'état du dispositif (104) provoqué par les étapes de commande, dans lequel, pour chacune des étapes de commande, le filtre probabiliste (130) utilise un modèle de prédiction (305a, 305b) soumis à un bruit de prédiction pour estimer un état courant du dispositif (104) et utilise un modèle de mesure soumis à un bruit de mesure pour mettre à jour l'estimation de l'état courant du dispositif (104) sur la base de mesures de l'état du dispositif (104) ; et
l'émission de données indicatives de l'état suivi du dispositif (104) ; dans lequel
pour au moins certaines des étapes de commande, le filtre probabiliste (130) exécute le modèle de mesure plus de fois que le modèle de prédiction (305a, 305b),
dans lequel, pendant une étape de commande courante, le procédé comprend :
l'exécution du modèle de prédiction (305a, 305b) pour mettre à jour un état précédent du dispositif (104) déterminé pendant une étape de commande précédente pour prédire l'état courant du dispositif (104) ;
la collecte d'un signal de rétroaction incluant les mesures indicatives de l'état courant du dispositif (104) ;
la mise à jour de l'état courant prédit en exécutant le modèle de mesure configuré pour mettre à jour l'état courant prédit du dispositif (104) sur la base des mesures, pour produire l'estimation de l'état courant du dispositif (104) ; et
l'exécution du modèle de mesure de manière itérative jusqu'à ce qu'une condition de terminaison soit satisfaite, dans lequel pour chaque itération, le filtre probabiliste (130) est configuré pour
la mise à jour de l'estimation de l'état courant du dispositif (104) avec le modèle de mesure soumis au bruit de mesure mis à jour pendant une itération précédente ; et
la mise à jour du bruit de mesure sur la base d'une corrélation des mesures avec l'estimation mise à jour de l'état courant du dispositif (104),
**caractérisé en ce que**,
pour déterminer la corrélation des mesures, le procédé comprend :
le centrage d'une moyenne d'une distribution probabiliste représentant le bruit de mesure sur des mesures prédites générées en transformant l'un ou une combinaison de l'état courant prédit du dispositif (104) et de l'estimation de l'état courant du dispositif (104) dans l'espace de mesure ; et
la mise à jour d'une variance de la distribution probabiliste pour augmenter la vraisemblance d'échantillonnage des mesures sur la distribution probabiliste avec la variance mise à jour.
